# EUROPEAN PATENT APPLICATION

(11) **EP 3 940 605 A1**
(43) Date of publication of application: **19.01.2022**
(21) Application number: 21165400.9
(22) Date of filing: 26.03.2021
(51) Int. Cl.: G06N 3/063, G06N 3/04, G06F 7/544

(54) **MAPPING CONVOLUTION TO CONNECTED PROCESSING ELEMENTS USING DISTRIBUTED PIPELINED SEPARABLE CONVOLUTION OPERATIONS**

(30) Priority: 22.04.2020 US 202016855927
(71) Applicant: Facebook, Inc., Menlo Park, CA 94025 (US)
(72) Inventor: DIRIL, Abdulkadir Utku, Menlo Park, CA California 94025 (US); NAIR, Krishnakumar Narayanan, Menlo Park, CA California 94025 (US); KADKOL, Anup Ramesh, Menlo Park, CA California 94025 (US); ZADEH, Ehsan Khish Ardestani, Menlo Park, CA California 94025 (US); HAO, Yuchen, Menlo Park, CA California 94025 (US); ULRICH, Thomas Mark, Menlo Park, CA California 94025 (US); KOMURAVELLI, Rakesh, Menlo Park, CA California 94025 (US); FIROOZSHAHIAN, Amin, Menlo Park, CA California 94025 (US); SCHATZ, Martin, Menlo Park, CA California 94025 (US); WU, Olivia, Menlo Park, CA California 94025 (US)
(74) Representative: Murgitroyd & Company

(57) **Abstract**

A processor system comprises a plurality of dot product processor units and element-wise multiplication units. The dot product processor units perform a depthwise convolution of a data matrix with a separate depthwise convolution weight matrix for each data matrix channel. Each dot product processor unit performs at least a portion of the depthwise convolution for one or more data matrix channels. The element-wise multiplication units perform multiplication operations of a pointwise convolution. Each element-wise multiplication unit applies to each depthwise convolution partial result element received from one or more of the dot product processor units a corresponding data element from each of a plurality of pointwise convolution weight filters to determine element-wise multiplication unit results. The processor system sums together different groups of data elements from the element-wise multiplication unit results to at least in part calculate different data elements of a result of the pointwise convolution.

## Description

### TECHNICAL FIELD

A processor system for performing efficient convolution operations is disclosed.

### BACKGROUND OF THE INVENTION

A whole class of complex artificial intelligence problems can be solved using neural networks. Since these problems are often computationally and data intensive, hardware solutions are often beneficial for improving the performance of neural networks. The solutions to artificial intelligence problems can often be more quickly solved using hardware-based solutions that optimize the performance of traditional convolution operations. Traditional optimization approaches for convolution operations require specialized hardware and complex memory organization or transformation schemes. It is a technical challenge to create a hardware platform compatible with solving traditional convolution operations while also significantly improving the performance and efficiency. Therefore, there exists a need for a hardware and data path solution that improves on the ability to efficiently compute convolution operations needed for solving complex artificial intelligence problems without introducing significant complexity and restrictions.

### SUMMARY OF THE INVENTION

In accordance with a first aspect of the present disclosure, there is provided a processor system, comprising: a plurality of dot product processor units configured to perform a depthwise convolution of a data matrix having a plurality of channels with a plurality of depthwise convolution weight matrices including a separate depthwise convolution weight matrix for each of the plurality of channels, wherein each of the dot product processor units is configured to perform at least a portion of the depthwise convolution for one or more channels included in the plurality of channels; and a plurality of element-wise multiplication units configured to at least in part perform multiplication operations of a pointwise convolution, wherein each of the element-wise multiplication units is configured to apply to each depthwise convolution partial result element received from one or more of the dot product processor units a corresponding data element from each of a plurality of pointwise convolution weight filters to determine element-wise multiplication unit results; wherein the processor system is configured to sum together different groups of data elements from the element-wise multiplication unit results from the plurality of element-wise multiplication units to at least in part calculate different data elements of a result of the pointwise convolution.

In some embodiments, the plurality of element-wise multiplication units may be configured to at least in part perform the multiplication operations of the pointwise convolution prior to a completion of the depthwise convolution.

In some embodiments, the processor system may be configured to sum together the different groups of the data elements from the element-wise multiplication unit results at least in part in parallel.

In some embodiments, each of the dot product processor units may include a plurality of calculation units.

In some embodiments, each calculation unit of the plurality of calculation units may include a vector multiply unit and a vector adder unit.

In some embodiments, the vector adder unit may include an adder tree.

In some embodiments, the data matrix may be a three-dimensional machine learning data matrix.

In some embodiments, the separate depthwise convolution weight matrix and each of the plurality of pointwise convolution weight filters may be machine learning weight matrices.

In some embodiments, the separate depthwise convolution weight matrix may be a 3x3 matrix.

In some embodiments, the separate depthwise convolution weight matrix may be a 3x3, 5x5, 7x7, 9x9, or 11x11 matrix.

In some embodiments, each of the plurality of pointwise convolution weight filters may have a channel depth that corresponds to a count of the plurality of channels of the data matrix.

In some embodiments, the system may further comprise: a plurality of reduction units; a plurality of point-to-point connections, wherein each point-to-point connection of the plurality of point-to-point connections is configured to provide a result of a first reduction unit of the plurality of reduction units to a second reduction unit of the plurality of reduction units; and a communication bus connecting together the plurality of dot product processor units.

In some embodiments, the first reduction unit may include an adder configured to perform vector addition operations.

In some embodiments, each of the plurality of dot product processor units may be configured to receive a depthwise convolution operation instruction via the communication bus.

In some embodiments, each of the plurality of element-wise multiplication units may be configured to receive a pointwise convolution operation instruction via the communication bus.

In some embodiments, the second reduction unit of the plurality of reduction units may be configured to add together a local result of an element-wise multiplication unit of the plurality of element-wise multiplication units with a reduced result of the first reduction unit of the plurality of reduction units to determine a reduction unit result.

In some embodiments, the second reduction unit may be further configured to provide the reduction unit result to a third reduction unit of the plurality of reduction units via a point-to-point connection of the plurality of point-to-point connections.

In accordance with a second aspect of the present disclosure, there is provided a method comprising: determining a vector of depthwise convolution partial result elements using a dot product engine of a first processing element, wherein the vector of depthwise convolution partial result elements corresponds to a matrix slice from an assigned channel of a three-dimensional data matrix and a separate depthwise convolution weight matrix; providing the vector of depthwise convolution partial result elements to an element-wise multiplication unit of the first processing element; determining element-wise multiplication results for each element of the vector of depthwise convolution partial result elements by performing multiplication operations of a pointwise convolution using the each element and corresponding data elements from a channel of a plurality of pointwise convolution weight filters; providing the element-wise multiplication results for each element of the vector of depthwise convolution partial result elements to a reduction unit of the first processing element; receiving upstream results from a second processing element via a first point-to-point connection; summing together the upstream results with the corresponding element-wise multiplication results to determine reduction unit results; and sending the reduction unit results to a third processing element via a second point-to-point connection.

In some embodiments, the upstream results may be at least in part determined using corresponding data elements from corresponding channels of the plurality of pointwise convolution weight filters.

In accordance with a third aspect of the present disclosure, there is provided a processing element system, comprising: a dot product processor unit configured to perform a depthwise convolution using a two-dimensional matrix slice of a three-dimensional data matrix with a depthwise convolution weight matrix of a plurality of depthwise convolution weight matrices; an element-wise multiplication unit configured to at least in part perform multiplication operations of a pointwise convolution by applying to each depthwise convolution partial result element received from the dot product processor unit a corresponding data element from each of a plurality of pointwise convolution weight filters to determine local element-wise multiplication unit results; a first point-to-point connection configured to receive an upstream result from an upstream processing element; a reduction unit configured to sum together the received upstream result and the determined local element-wise multiplication unit results to determine a reduction unit result; and a second point-to-point connection configured to provide the determined reduction unit result to a downstream processing element.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### BRIEF DESCRIPTION OF THE DRAWINGS

Various embodiments of the invention are disclosed in the following detailed description and the accompanying drawings.
Figure 1 is a block diagram illustrating an embodiment of a system for solving artificial intelligence problems using a neural network.
Figure 2 is a block diagram illustrating an embodiment of a processing element for solving artificial intelligence problems using a neural network.
Figure 3 is a flow chart illustrating an embodiment of a process for solving a convolution problem.
Figure 4 is a flow chart illustrating an embodiment of a process for solving a convolution problem by distributing operations across processing elements.
Figure 5 is a flow chart illustrating an embodiment of a process for solving a convolution problem by distributing operations across processing elements.
Figure 6 is a flow chart illustrating an embodiment of a pipelined process for performing a convolution operation using a processor system.
Figure 7 is a flow chart illustrating an embodiment of a pipelined process for performing convolution operations using a processor system.
Figure 8 is a block diagram illustrating an embodiment of a dot product engine for solving artificial intelligence problems using a neural network.
Figure 9 is a flow chart illustrating an embodiment of a process for performing two-dimensional convolution operations using a dot product engine.
Figure 10 is a flow chart illustrating an embodiment of a process for performing a two-dimensional convolution operation using a dot product engine.
Figure 11 is a flow chart illustrating an embodiment of a process for performing a two-dimensional depthwise convolution operation using a dot product engine and vector unit operations.
Figure 12 is a flow chart illustrating an embodiment of a process for performing a two-dimensional depthwise convolution operation using a dot product engine and vector unit operations.
Figures 13A and 13B are diagrams illustrating example matrix operands for performing depthwise convolution.
Figures 14A and 14B are diagrams illustrating an example of an unrolled data matrix for performing depthwise convolution.
Figures 15A and 15B are diagrams illustrating an example of an unrolled weight matrix for performing depthwise convolution.
Figures 16A and 16B are diagrams illustrating an example of vector computations for performing depthwise convolution.

### DETAILED DESCRIPTION

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

A processor system for performing efficient convolution operations is disclosed. Using the disclosed techniques, the workload of a traditional convolution operation is decomposed into pipelined separable convolutions and distributed across multiple connected processing elements. The pipelined separable convolutions closely approximate the traditional convolution operation but require fewer overall operations and resources while producing similar intended results. For example, a convolution operation is solved using a combination of depthwise and pointwise convolutions. Each channel of the data matrix and its corresponding depthwise convolution weight matrix is assigned to a processing element. At each processing element, depthwise convolution operations are performed using a dot product engine. As partial depthwise convolution results are determined, depthwise convolution partial result elements are passed to a pointwise convolution unit such as an element-wise multiplication unit. Each processing element's element-wise multiplication unit is prepared to receive depthwise convolution partial result elements and corresponding data elements from pointwise convolution weight filters to determine element-wise multiplication unit results that are partial pointwise results. For example, each depthwise convolution partial result element is multiplied against corresponding data elements from pointwise convolution weight filters. The element-wise multiplication unit results are then passed to a reduction unit of the processing element to sum together the different groups of data elements from different element-wise multiplication units. In some embodiments, the reduction unit is part of a reduction network made up of point-to-point connections between processing elements and their reduction units. At each node of the reduction network, the current processing element's element-wise multiplication unit results are added to the element-wise multiplication unit results received from an upstream node. Within each processing element, the depthwise convolution, element-wise multiplication operations, and reduction operations are pipelined. By distributing the workload across different processor elements using pipelined depthwise and pointwise convolution operations and summing the results across a reduction network, the efficiency and utilization of the hardware processing elements are significantly increased. Convolutions can be performed with significant performance benefits over a traditional general-purpose processor and/or standard matrix processor hardware. The specialized hardware configuration of the processing units disclosed herein results in significant performance improvements and resource efficiencies gained over using a general-purpose processor and traditional hardware configurations.

In some embodiments, a processor system comprises a plurality of dot product processor units. For example, a processor system includes multiple communicatively connected processing elements where each processing element includes a dot product engine with a dot product processor unit. The plurality of dot product processor units is configured to perform a depthwise convolution of a data matrix having a plurality of channels with a plurality of depthwise convolution weight matrices. For example, a convolution operation can be solved using a combination of separable convolutions including a depthwise and a pointwise convolution that approximates the original convolution operation. The depthwise convolution portion is solved using a plurality of dot product processor units and the pointwise convolution portion is solved using a plurality of element-wise multiplication units and a reduction network. A data matrix such as a 3D convolution data matrix with width, height, and channel (depth) dimensions is one argument to a depthwise convolution problem solved using the dot product engines of the processing elements. In some embodiments, the data matrix is a 3D machine learning data matrix used to solve machine learning problems. A corresponding set of depthwise convolution weight matrices is a second argument to the depthwise convolution problem. In some embodiments, the plurality of depthwise convolution weight matrices includes a separate depthwise convolution weight matrix for each of the plurality of channels. For example, a 2D depthwise convolution weight matrix exists for each channel of the 3D convolution data matrix. In some embodiments, the depthwise convolution weight matrices are each a 2D machine learning weight matrix.

In some embodiments, each of the dot product processor units is configured to perform at least a portion of the depthwise convolution for one or more channels included in the plurality of channels. For example, the depthwise convolution problem is distributed across different processing elements where the dot product processor unit of each assigned processing element performs an assigned portion of the depthwise convolution problem. The depthwise convolution problem can be distributed based on channel. For example, different channels of the data matrix and corresponding depthwise convolution weight matrices are assigned to different processing elements and their corresponding dot product engine and dot product processor unit.

In some embodiments, the processor system further comprises a plurality of element-wise multiplication units configured to at least in part perform multiplication operations of a pointwise convolution. For example, an element-wise multiplication unit of each processing element performs element-wise multiplication operations corresponding to portions of a pointwise convolution operation. Each of the element-wise multiplication units is configured to apply to each depthwise convolution partial result element received from one or more of the dot product processor units a corresponding data element from each of a plurality of pointwise convolution weight filters to determine element-wise multiplication unit results. For example, each element-wise multiplication unit is assigned one or more corresponding channels of the pointwise convolution weight filters matching the assigned channels of the data matrix. In some embodiments, the pointwise convolution weight filters are each a machine learning weight matrix with a width and height of one and a channel depth the same as the channel depth of the data matrix. Using its element-wise multiplication unit, each processor element can compute a partial pointwise convolution result by multiplying the elements of the assigned pointwise convolution weight elements with depthwise convolution partial result elements computed using the processing element's dot-product processor unit. In some embodiments, the dot product partial results and pointwise convolution operations are pipelined. For example, the pointwise convolution operations using the element-wise multiplication units can be performed prior to completion of the depthwise convolution by the dot product processor units.

In some embodiments, the processor system is configured to sum together different groups of data elements from the element-wise multiplication unit results from the plurality of element-wise multiplication units to at least in part calculate different data elements of a result of the pointwise convolution. For example, using a reduction network, the outputs of multiple element-wise multiplication units are summed together. At each downstream processing element, a reduction unit sums together the element-wise multiplication unit results computed by its corresponding element-wise multiplication unit with element-wise multiplication unit results received from an upstream processing element. The summation operations can be performed in a pipelined manner. For example, the summing operations can be performed prior to completion of the depthwise convolution by the dot product processor units. In some embodiments, the summation operations for different groups of data elements from the element-wise multiplication unit results can be performed in parallel. For example, an element-wise multiplication unit can operate on multiple data elements in parallel using vector addition operations.

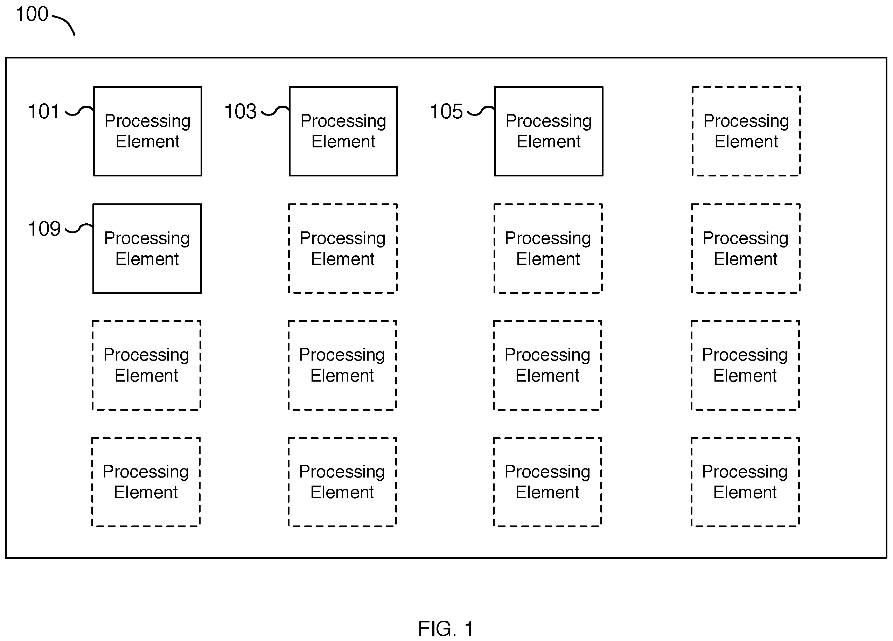

Figure 1 is a block diagram illustrating an embodiment of a system for solving artificial intelligence problems using a neural network. For example, system 100 may be applied to use a neural network to solve problems such as image recognition and recommendation system matches. The convolution operations corresponding to the different layers of the neural network can be solved by distributing computational workload to the different processing elements of system 100. In particular, traditional convolution operations can be mapped to system 100 as separable convolutions using depthwise and pointwise convolutions that approximate the traditional convolution operations. In the example shown, system 100 includes multiple processing elements such as processing elements 101, 103, 105, and 109. Additional processing elements are displayed in dotted boxes. Each processing element may be utilized by system 100 to perform assigned portions of depthwise and pointwise convolution operations. In various embodiments, the system 100 may include fewer or more processing elements. For example, the number of processing elements can be scaled up or down depending on the intended computational and data requirements. In some embodiments, system 100 is communicatively connected to a memory unit (not shown). For example, the memory unit may be a last level cache (LLC), a shared memory, and/or may be implemented using static random-access memory (SRAM).

In some embodiments, the processing elements of system 100, including processing elements 101, 103, 105, and 109, are connected to a communication bus (not shown). The communication bus may be used to transmit processing element instructions and optional instruction arguments. For example, a convolution operation instruction and convolution operands may be transmitted to a processing element, such as processing element 101, via the communication bus. In various embodiments, a large, complex artificial intelligence problem can be solved using system 100 by separating the problem with distributed operations, such as operations corresponding to portions of depthwise and pointwise convolutions. The distributed operations can be assigned to different processing elements. Convolution arguments such as data elements of a convolution data matrix and data elements of depthwise convolution weight matrices and pointwise convolution weight filters can be distributed to the appropriately assigned processing elements. The results of the assigned distributed operations can be reduced and merged to determine the solution to the larger and more complex convolution problem, such as a traditional convolution problem. In some scenarios, the distributed operations are solved in parallel and/or in pipelined stages. In some scenarios, the depthwise and pointwise convolution operations are pipelined and/or solved in parallel. As results for portions of the depthwise convolution are solved, the partial depthwise convolution results are used to compute partial pointwise convolution results. The pointwise convolution results can be reduced using a reduction network. In some embodiments, the partial results of a first processing element are fed as an input to a second processing element. For example, the partial pointwise convolution results of a first processing element are summed with the partial pointwise convolution results of a second processing element. The results are then summed with the partial pointwise convolution results of a third processing element, and so forth, until a final vector of summed results is determined that corresponds to determining results corresponding to the traditional convolution problem.

In various embodiments, the processing elements of system 100, such as processing elements 101, 103, 105, and 109, each may include a control logic (not shown), a dot product engine (not shown), an element-wise multiplication unit (not shown), a reduction unit (not shown), and a point-to-point connection (not shown) with another processing element. For example, a point-to-point connection provides the compute result of one processing element to the reduction unit of a downstream processing element. The reduction unit receives both the result of its processing element and the upstream result and merges the two results together. The merged result can be provided to a subsequent downstream processing element via a separate point-to-point connection with the subsequent downstream processing element. In some embodiments, multiple processing elements are daisy-chained together via multiple point-to-point connections to merge the results of multiple processing elements. In various embodiments, the output of an element-wise multiplication unit of a first processing element can be summed with the output of a second element-wise multiplication unit of a second processing element by transmitting the result of the first element-wise multiplication unit via a point-to-point connection to the reduction unit of the second processing element. The reduction unit of the second processing element merges the outputs of both element-wise multiplication units.

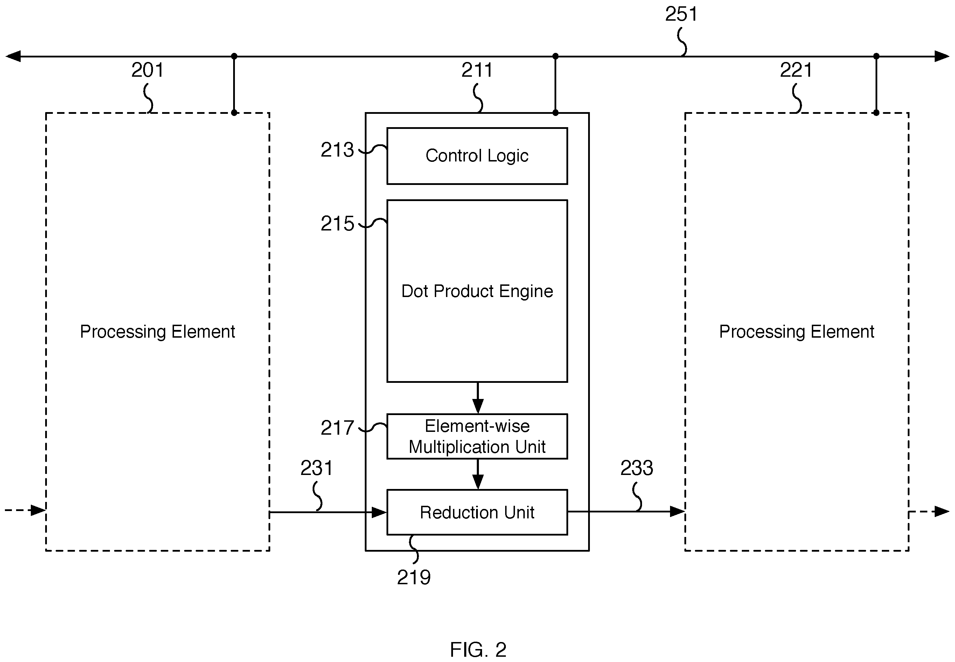

Figure 2 is a block diagram illustrating an embodiment of a processing element for solving artificial intelligence problems using a neural network. In the example shown, processing element 211 includes control logic 213, dot product engine 215, element-wise multiplication unit 217, and reduction unit 219. Processing element 211 is connected to processing element 201 via point-to-point connection 231 and to processing element 221 via point-to-point connection 233. Processing element 211 is also connected to communication bus 251. Processing elements 201 and 221 are shown as dotted boxes and some details of processing elements 201 and 221 are not shown. Dotted arrows leading to processing element 201 and from processing element 221 are optional point-to-point connections from additional (optional) processing elements (not shown). Similar to processing element 211, processing elements 201 and 221 are connected to communication bus 251. In some embodiments, processing element 211 is one of processing elements 101, 103, 105, and/or 109 of Figure 1 and point-to-point connection 231 and/or 233 is a point-to-point connection connecting to another processing element of Figure 1.

In some embodiments, control logic 213 of processing element 211 is used to control the operation of processing element 211 including the operation of dot product engine 215, element-wise multiplication unit 217, and reduction unit 219. For example, control logic 213 may be used to determine how to process data received at reduction unit 219, including what byte lane to assign different data arguments. In some embodiments, control logic 213 is used to process instructions received by processing element 211 via communication bus 251. For example, a processing element instruction may include depthwise convolution operation instructions, depthwise convolution arguments, pointwise convolution operation instructions, pointwise convolution arguments, byte alignment commands, etc. In some embodiments, control logic 213 is used to direct data elements from convolution weight matrices and/or pointwise convolution weight filters to the appropriate component of processing element 211.

In some embodiments, dot product engine 215 includes a dot product processor unit for performing convolution operations such as depthwise convolution operations. For example, dot product engine 215 may be a dot product engine for performing depthwise convolution operations using data elements from a convolution data matrix and corresponding weights as arguments. In some embodiments, dot product engine 215 may receive a portion of data elements from one or more channels of a convolution data matrix and corresponding data elements of corresponding depthwise convolution weight matrices to determine depthwise convolution result data elements for the specific channels of the convolution data matrix. Dot product engine 215 of processing element 211 can be used, in part, to solve a traditional convolution problem by solving a portion of a separable depthwise convolution with neighboring processing elements such as processing elements 201 and 221. In some embodiments, dot product engine 215 may include input and/or output buffers for loading input data elements and writing out result data elements. In the example shown, dot product engine 215 provides the output result to element-wise multiplication unit 217.

In some embodiments, element-wise multiplication unit 217 is a hardware unit for performing element wise multiplication. For example, element-wise multiplication unit 217 can multiply an element with a corresponding element to determine an element-wise multiplication unit result. In some embodiments, element-wise multiplication unit 217 takes two inputs, a data element input and a vector input, and multiplies the data element with every element of the vector input to determine a vector of multiplication output results. In some embodiments, element-wise multiplication unit 217 takes two input vectors and multiplies each element of the first input vector with each element of the second input vector. For example, two 32-element input vectors can result in 1024 multiplication results. The multiplication results can be computed one vector at a time over multiple cycles. For example, 32 different vector results, each with 32-elements, can be computed over 32 cycles.

In some embodiments, reduction unit 219 is a hardware unit for reducing two data inputs. In the example shown, reduction unit 219 receives a first input operand from element-wise multiplication unit 217 and a second input operand from processing element 201 via point-to-point connection 231. In some embodiments, the inputs are vector inputs where each input includes multiple elements. In various embodiments, the first input operand from element-wise multiplication unit 217 is a vector of element-wise multiplication results and may correspond to partial pointwise convolution results. The second input operand is a processing result from processing element 201. In some embodiments, the processing result from processing element 201 may be the result of a pointwise convolution operation performed by processing element 201 and/or the result from merging the pointwise convolution operation result of processing element 201 using a corresponding reduction unit (not shown) of processing element 201. Once the two input operands are received by reduction unit 219, reduction unit 219 provides the reduced result to processing element 221 via point-to-point connection 233. In various embodiments, reduction unit 219 merges (or reduces) two inputs into a single output. In some embodiments, the reduction operation is a vector sum operation of the two inputs to reduction unit 219. For example, reduction unit 219 can include an adder such as a vector adder for performing vector addition operations. Other operations on the two inputs may be appropriate as well, such as logical operations (AND, OR, XOR, etc.), shift operations, a subtraction operation, etc., as well as combinations of operations. The output can then be provided to a downstream processing element via a point-to-point connection. In some embodiments, one or both inputs may be shifted so that each input is preserved but aligned differently. For example, reduction unit 219 may shift one input to concatenate the two inputs together. As an example, two 8-byte inputs can be merged into a 16-byte output result. Similarly, two 16-byte inputs can be merged into a 32-byte output result. In various embodiments, different input data sizes (e.g., 4-byte, 8-byte, 16-byte, etc.) and alignment options may be appropriate depending on the compute context.

In some embodiments, point-to-point connections 231 and 233 are network connections from processing element 201 and to processing element 221, respectively, for processing element 211. Point-to-point connection 231 is used to provide convolution operation results and/or the results of a reduction unit (not shown) of processing element 201 to reduction unit 219 of processing element 211. Point-to-point connection 233 is used to provide the results of reduction unit 219 of processing element 211 to a reduction unit (not shown) of processing element 221. In various embodiments, processing elements can include a connection to an upstream processing element, such as point-to-point connection 231 for processing element 211, and/or a connection to a downstream processing element, such as point-to-point connection 233 for processing element 211. By utilizing a point-to-point connection, the compute results of a processing element do not need to be transmitted over communication bus 251. Bus protocols and other related overhead for bus communication are avoided.

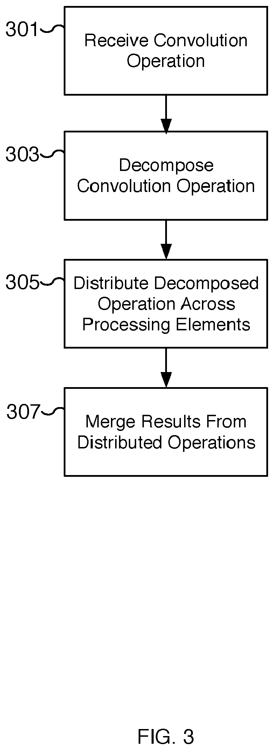

Figure 3 is a flow chart illustrating an embodiment of a process for solving a convolution problem. For example, a traditional convolution problem is solved using a combination of separable convolutions that closely approximate the traditional convolution problem. The processing of the separable convolutions is distributed over a number of processing elements. In various embodiments, the hardware system includes multiple processing elements, each configured with a hardware dot product engine, an element-wise multiplication unit, and a reduction unit. The processing elements are connected using a reduction network of point-to-point connections. The traditional convolution problem can be decomposed into multiple operations that are assigned to the different components of the processing elements. In some embodiments, the process of Figure 3 is implemented using a hardware system such as system 100 of Figure 1. In some embodiments, each processing element of the hardware system is a processing element such as processing element 211 of Figure 2. In some embodiments, the steps 301 and/or 303 are implemented in software, for example, using a software compiler to receive and decompose a traditional convolution operation. In various embodiments, the steps 301 and/or 303 may also be implemented in hardware using a hardware system such as system 100 of Figure 1 to receive and decompose a traditional convolution operation.

At 301, a convolution operation is received. The convolution operation, such as a traditional convolution operation, includes operands such as a 3D convolution data matrix and convolution weight matrices. In various embodiments, the convolution operation may require computing convolutions over a large number of data elements and a significant number of computations and resources. To improve the efficiency of the computation of the convolution operation, the convolution operation can be replaced with a combination of separable convolutions that approximate the convolution operation. In order to perform the separable convolutions more efficiently, the problem is decomposed into multiple smaller operations such as multiple partial depthwise and pointwise convolution operations.

At 303, the convolution operation is decomposed. For example, the traditional convolution operation received at 301 is decomposed into smaller sub-problems. Each sub-problem utilizes convolution operations, such as partial depthwise and pointwise convolution operations, that a single processing element and its components can process. For example, a processing element configured with a dot product engine that can compute 32 partial depthwise convolution data element results is assigned one or more channels of the original convolution data matrix with corresponding depthwise convolution weights for performing depthwise convolution operations. Similarly, an element-wise multiplication unit can be assigned to perform portions of a pointwise convolution and a reduction unit can be assigned to sum partial pointwise convolution results across multiple processing elements. In various embodiments, the output of one processing element may be reduced with the output of another processing element, for example, by summing the results together. In some embodiments, the sub-problems can be solved in parallel and/or in pipelined stages. For example, the depthwise and pointwise convolution portions can be solved in a pipeline manner with the result of a partial depthwise convolution operation used as an input to a pointwise convolution operation.

At 305, decomposed operations are distributed across processing elements. For example, each of the sub-problems of the decomposed convolution operation of 303 is distributed to a processing element. In various embodiments, multiple processing elements of the hardware system each receive one or more sub-problems to solve. The sub-problems may be directed to different components of each processing element. The received sub-problems may utilize a subset of the original convolution arguments such as a portion of data elements from the 3D convolution data matrix and corresponding data elements from depthwise convolution weight matrices and pointwise convolution weight filters. In some embodiments, a processing element may also receive as input the result computed by another processing element, for example, to sum together (or reduce) two sets of partial results. The distributed operations may be solved in parallel by the assigned processing elements to achieve significant performance improvements.

At 307, results from distributed operations are merged. For example, the results computed at each processing element are reduced and merged to determine a final result for the convolution operation received at 301. In some embodiments, the results are first reduced in part by daisy-chaining processing elements and utilizing point-to-point connections between processing elements as described herein. The reduced results may be written more efficiently to avoid unnecessary memory writes, which results in significant performance improvements. In various embodiments, reduced results solved using distributed processing elements of the hardware system are finally merged together, for example, by writing to a shared memory location, to determine the final result of the convolution operation received at 301.

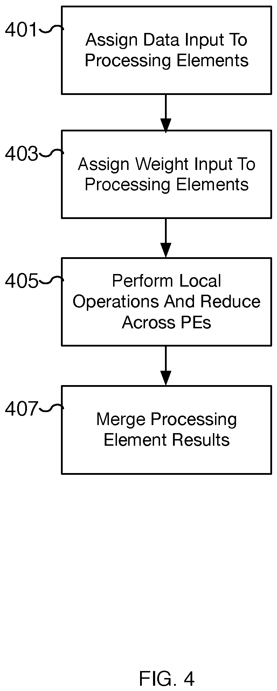

Figure 4 is a flow chart illustrating an embodiment of a process for solving a convolution problem by distributing operations across processing elements. For example, a traditional convolution problem is solved by distributing partial separable convolution operations to different processing elements and reducing the distributed results. In some embodiments, different portions of a 3D convolution data matrix and corresponding weights are assigned to and transmitted to different processing elements. The different components of each corresponding processing element process the received input arguments to determine partial convolution results, such as partial depthwise convolution and pointwise convolution results by a dot product engine and element-wise multiplication unit, respectively. In some embodiments, each convolution result data element is determined in part by summing together partial results determined by multiple processing elements using a reduction network. In some embodiments, steps 401 and 403 are performed at 303 and/or 305 of Figure 3, step 405 is performed at 305 of Figure 3, and/or step 407 is performed at 307 of Figure 3. In some embodiments, the process of Figure 4 is implemented using a hardware system such as system 100 of Figure 1.

At 401, data input elements are assigned to and transmitted to processing elements. For example, data elements from a data matrix are assigned to each eligible processing element. The data elements may be from one or more channels of the data matrix. For example, in some embodiments, each processing element processes a single channel of a data matrix in parallel with the other processing elements. Once a processing element has completed its assigned elements from a single assigned channel, the processing element can begin to process data elements from its next assigned channel. In some embodiments, a convolution data matrix is C channels deep and there are 64 processing elements as part of the hardware system. The C channels are divided into groups of 64 channels. From each group of 64 channels, one channel is assigned to each of the 64 processing elements. In some embodiments, each processing element processes a single channel of its assigned channels before processing the next assigned channel. In various embodiments, the 64 processing elements each process an assigned channel in parallel. Although 64 processing elements are used in the example, a different number of processing elements can be appropriate as well.

At 403, weight input elements are assigned to and transmitted to processing elements. For example, data elements from depthwise convolution weight matrices and pointwise convolution weight filters are assigned to and transmitted to each of the processing elements. The assigned data elements from depthwise convolution weight matrices and pointwise convolution weight filters correspond to the data input elements from the data matrix assigned at 401. In some embodiments, for each processing element, data elements from depthwise convolution weight matrices are utilized by a dot product engine and data elements from pointwise convolution weight filters are utilized by an element-wise multiplication unit.

In some embodiments, each depthwise convolution weight matrix corresponds to a channel of the convolution data matrix and the data elements of each depthwise convolution weight matrix are assigned accordingly. For example, in one scenario, a convolution data matrix is C channels deep, there are C corresponding depthwise convolution weight matrices, and there are 64 processing elements as part of the hardware system. Each of the C depthwise convolution weight matrices is assigned to the processing element that is assigned its corresponding channel of the data matrix. For example, in the event C is 128, a first processing element can be assigned the 1st and 65th depthwise convolution weight matrix. A second processing element can be assigned the 2nd and 66th depthwise convolution weight matrix. The 64th processing element can be assigned the 64th and 128th depthwise convolution weight matrix. And so forth. Each of the C depthwise convolution weight matrices is assigned to the appropriate processing element. For larger values of C, each of the processing elements is assigned a corresponding depthwise convolution weight matrix from each group of 64 depthwise convolution weight matrices.

In some embodiments, each data element of the pointwise convolution weight filters corresponds to a different channel of the data matrix. This corresponding channel also corresponds to the depthwise convolution result using the data matrix. The data elements of each of the pointwise convolution weight filters is assigned accordingly. For example, in one scenario, a convolution data matrix is C channels deep, there are K corresponding pointwise convolution weight filters, each C channels deep, and there are 64 processing elements as part of the hardware system. Each pointwise convolution weight filter is a 1x1xC weight filter. Each data element of the K pointwise convolution weight filters corresponds to a different channel of the data matrix and a depthwise convolution result using the data matrix. Each data element of the K filters is assigned to the processing element that is assigned its corresponding channel of the data matrix. For example, in the event C is 128, a first processing element can be assigned the 1st and 65th elements of each pointwise convolution weight filter. A second processing element can be assigned the 2nd and 66th elements of each pointwise convolution weight filter. The 64th processing element can be assigned the 64th and 128th elements of each pointwise convolution weight filter. For larger values of C, each of the processing elements is assigned the corresponding element from each group of 64 elements of each pointwise convolution weight filter. Although 64 processing elements are used in the examples, a different number of processing elements can be appropriate as well.

At 405, local processing element operations are performed and the results reduced across processing elements. In some embodiments, each processing element performs operations corresponding to depthwise and pointwise convolutions using the assigned and received data and weight elements and reduces the results across processing elements. For example, a dot product engine determines partial depthwise convolution results that are used by an element-wise multiplication unit to determine partial pointwise convolution results. The partial pointwise convolution results are summed together across processing elements to determine a convolution result data element for the original convolution problem.

In some embodiments, multiple local results can be computed by each processing element to determine a vector of local results. Each local convolution result can correspond to a partial result used together with the local results of one or more other processing elements to determine a traditional convolution result data element. For example, the partial results computed across multiple processing elements are reduced using a reduction network to determine a convolution result data element. In some embodiments, the partial results are summed by transmitting the local results, such as partial pointwise convolution results, across a reduction network and performing a running sum at each node of the network. For example, each processing element determines depthwise convolution results using its dot product engine for one or more channels of the data matrix. The depthwise results are fed to the processing element's element-wise multiplication unit to compute partial pointwise convolution results using the corresponding data elements of the pointwise convolution weight filters. In parallel, multiple processing elements determine partial pointwise convolution results corresponding to different channels. The partial pointwise convolution results for the different channels are summed together by using the reduction units of the processing element. For example, in the event there are 64 total channels and 64 processing elements, the reduction unit of the second processing element sums together the partial results of the first and second processing elements. The reduction unit of the third processing element sums together the partial results of the first, second, and third processing elements by adding the result of the third processing element to the sum of the results from the first and second processing elements. At the 64th processing element, the output of the reduction unit is the sum of all corresponding 64 channels and is a convolution result data element of the original convolution problem.

At 407, processing element results are merged. For example, the convolution result data elements computed at 405 are merged together to determine a final result for the original convolution problem. In some embodiments, the convolution result data elements are merged by their respective processing elements by writing to a shared location such as a shared memory location. By writing all results to a shared memory location, the convolution result data elements can be merged into a convolution result matrix.

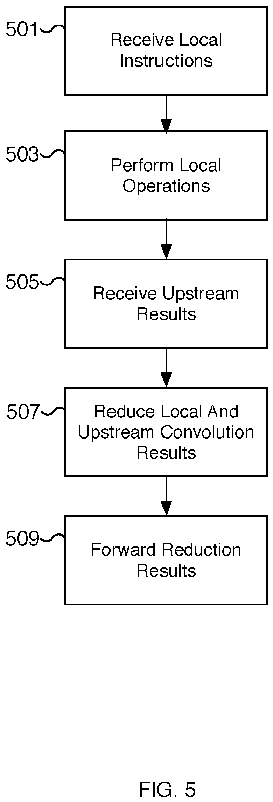

Figure 5 is a flow chart illustrating an embodiment of a process for solving a convolution problem by distributing operations across processing elements. In various embodiments, the process of Figure 5 is performed by each of the processing elements used to perform a portion of the computation required to solve a traditional convolution problem distributed across multiple processing elements. In some embodiments, the process of Figure 5 is performed at least in part at or in response to 303, 305, and/or 307 of Figure 3 and/or 405 and/or 407 of Figure 4. In some embodiments, the process of Figure 5 is performed by one or more processing elements of system 100 of Figure 1. In some embodiments, each processing element is a processing element such as processing element 211 of Figure 2.

At 501, local instructions are received. For example, a depthwise convolution instruction, a pointwise convolution instruction, and/or a reduction instruction is received at a processing element. In some embodiments, the instruction is processed by a control logic of the processing element such as control logic 213 of Figure 2. In various embodiments, the instruction includes a specific convolution operation and convolution arguments specifying the data elements to perform the convolution operation on. For example, the instruction may specify utilizing a dot product engine to determine partial depthwise convolution results. As another example, the instruction may specify utilizing an element-wise multiplication unit to determine partial pointwise convolution results. As yet another example, the instruction may specify utilizing a reduction unit to sum together multiple partial pointwise convolution results. In some embodiments, the local instruction is used to solve, at least in part, a separable convolution problem using a dot product engine, an element-wise multiplication unit, and/or a reduction unit. In some embodiments, the instruction configures the use of multiple components of the processing element responsible for different portions of the separable convolution problem.

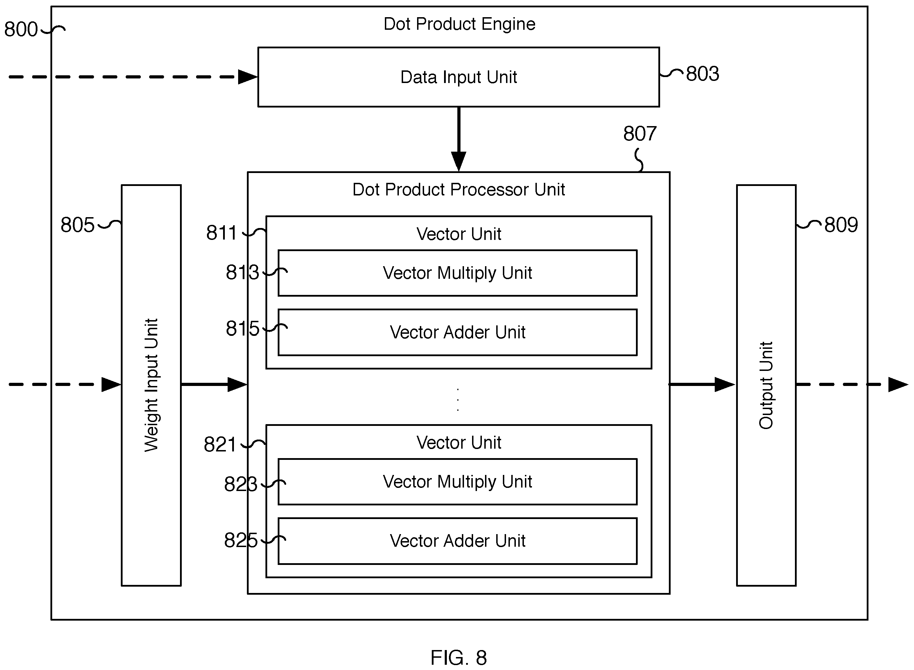

In some embodiments, the local arguments corresponding to the local instruction are received. For example, data elements of a convolution data matrix along with corresponding data elements of depthwise convolution weight matrices are received. As another example, the data elements may correspond to data elements of pointwise convolution weight filters. The elements may correspond to one or more channels of the data matrix and weight matrices/filters and are assigned to the processing element as part of distributing the computation for solving the convolution problem. In some embodiments, data elements are processed at a data input unit of a dot product engine, such as data input unit 803 of Figure 8, and weight elements are processed at a weight input unit of a dot product engine, such as weight input unit 805 of Figure 8.

At 503, local operations are performed. In some embodiments, a dot product engine performs depthwise convolution operations and an element-wise multiplication unit performs pointwise convolution operations. For example, using a dot product engine, a local depthwise convolution operation is performed by the processing element. In some embodiments, the dot product engine is dot product engine 215 of Figure 2. In some embodiments, depthwise convolution operations are performed in parallel, for example, by different vector units of the dot product engine. Each vector unit can be capable of outputting a partial depthwise operation result. For example, a dot product engine with 32 vector units can output 32 depthwise operation results for the same assigned channel. In some embodiments, the results are outputted as a 32-element vector of output results at an output unit such as output unit 809 of Figure 8. The depthwise convolution output results are transmitted to a local element-wise multiplication unit such as element-wise multiplication unit 217 of Figure 2. Using an element-wise multiplication unit, a local pointwise convolution operation is performed by the processing element using output from the dot product engine. In some embodiments, multiple pointwise convolution operations are performed in parallel, for example, by accepting a vector input to the element-wise multiplication unit. For example, each partial depthwise convolution result element can be multiplied with a data element from each pointwise convolution weight filter to determine partial pointwise convolution results. The results of the element-wise multiplication unit are partial pointwise convolution output results and are transmitted to a local reduction unit such as reduction unit 219 of Figure 2.

At 505, upstream results are received. For example, the processing result of an upstream processing element is received via a point-to-point connection. The processing result may be a vector of partial pointwise convolution results determined using an element-wise multiplication unit of the upstream processing element. In some embodiments, the processing result is a result of an upstream reduction unit that merges results from multiple upstream processing elements. In various embodiments, the upstream convolution results are received at a reduction unit such as reduction unit 219 of Figure 2.

At 507, local and upstream convolution results are reduced. For example, a local partial pointwise convolution result computed by a local convolution operation performed at 503 is merged with an upstream partial pointwise convolution result received at 505. In some embodiments, the local and upstream results are reduced by summing the two inputs together using a reduction unit such as reduction unit 219 of Figure 2. In various embodiments, the reduction sums together the partial results of different channels. In some embodiments, multiple results corresponding to different pointwise convolution weight filters are reduced in parallel.

At 509, reduction results are forwarded. In some embodiments, the reduced results are forwarded via a point-to-point connection to a downstream processing element. The downstream processing element may merge the reduced result with the element-wise multiplication unit results computed by the element-wise multiplication unit of the downstream processing element. By forwarding the reduced results directly to the downstream processing element, the number of memory writes required is minimized and results in improved performance and reduced power requirements.

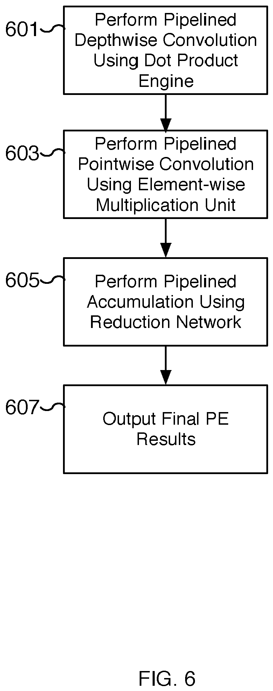

Figure 6 is a flow chart illustrating an embodiment of a pipelined process for performing a convolution operation using a processor system. For example, a traditional convolution operation is solved using a combination of separable convolutions performed in a pipeline manner and distributed across multiple processing elements. Although not mathematically equivalent, the combination of separable convolutions closely approximates the traditional convolution operation while requiring fewer resources. At each processing element, one or more local instructions are received that correspond to the assigned computations for that processing element. The assigned processing elements are each configured with a hardware dot product engine, hardware element-wise multiplier unit, and a hardware reduction unit. The hardware dot product engine performs depthwise convolutions and the hardware element-wise multiplier unit together with the reduction unit and a reduction network performs pointwise convolutions using the output from the dot product engine unit. The process of Figure 6 is performed in response to one or more received processor element instructions. In some embodiments, the process of Figure 6 is performed at 503, 505, 507, and 509 of Figure 5 and/or by one or more processing elements of system 100 of Figure 1. In some embodiments, each processing element is a processing element such as processing element 211 of Figure 2.

At 601, pipelined depthwise convolution is performed using a dot product engine. For example, data elements of a data matrix and of one or more corresponding depthwise convolution weight matrices are received at a dot product engine. The data elements of the data matrix are assigned by channel and are each two-dimensional matrix slices. Each corresponding depthwise convolution weight matrix is a 2D weight matrix. For example, each depthwise convolution weight matrix can be a 3x3 matrix of weights. The dot product engine performs a depthwise convolution on the input arguments to determine a partial depthwise convolution result data element. In some embodiments, depthwise convolution operations are performed by traversing along two dimensions of the data matrix, for example, traversing both the height and width of the data matrix but maintaining the same channel depth. As depthwise convolution operations are computed, the corresponding depthwise convolution result data elements are transmitted to the processing element's element-wise multiplier unit to pipeline pointwise convolution operations.

At 603, pipelined pointwise convolution is performed using an element-wise multiplier unit. For example, partial depthwise convolution results are paired with data elements from pointwise convolution weight filters to determine partial pointwise convolution results by applying element-wise multiplication using the element-wise multiplier unit. The partial depthwise convolution results and corresponding data elements from pointwise convolution weight filters are assigned by channel. In some embodiments, each data element from the pointwise convolution weight filters is selected from the same channel and corresponds to the channel assigned to the dot product engine. In various embodiments, an element-wise multiplication is performed with each depthwise convolution result and each assigned data element from the pointwise convolution weight filters. The partial pointwise convolution results are transmitted to the processing element's reduction unit to pipeline the summation of partial pointwise convolution results.

At 605, pipelined accumulation is performed using a reduction network. For example, using the reduction unit and its point-to-point connections, partial pointwise convolution results corresponding to each pointwise convolution weight filter are received along with reduced results from an upstream processing element. The partial pointwise convolution results determined at 603 are received from the element-wise multiplier unit of the processing element. The reduced results are received at the reduction unit via a point-to-point connection to an upstream processing element. In various embodiments, the reduction unit performs a vector accumulation operation to sum two input vectors to determine an output vector. For example, each reduced result corresponding to a summed upstream partial pointwise convolution result for a channel is summed with the local partial pointwise convolution result determined at 603. The results are outputted to the downstream processing element via a point-to-point connection of the reduction network. In various embodiments, the output is a vector of summed pointwise convolution results corresponding to each pointwise convolution weight filter.

In the process of Figure 6, the steps of 601, 603, and 605 are part of a pipelined process. The dot product engine continues to calculate depthwise convolution results corresponding to different portions of the input data matrix for the element-wise multiplication unit to process. Similarly, the element-wise multiplication unit continues to output partial pointwise results for the reduction unit to process. As the dot product engine processes the next set of depthwise convolution results at 601 for the element-wise multiplication unit to process at 603, the dot product engine processes results (at 603) for the reduction unit to process at 605. After an initial set of results, the dot product engine, element-wise multiplication unit, and reduction unit operate concurrently. In some embodiments, one or more of the components may wait for one or more of the other components to complete as some of the steps of 601, 603, and/or 605 may take longer than the others.

At 607, final processing element results are outputted. For example, summed partial pointwise convolution results corresponding to different final convolution results of the original convolution problem are outputted to a memory such as a shared memory. The results correspond to different data elements of a convolution result matrix. In some embodiments, the convolution results are outputted to a different storage location such as a scratchpad memory location or another appropriate location.

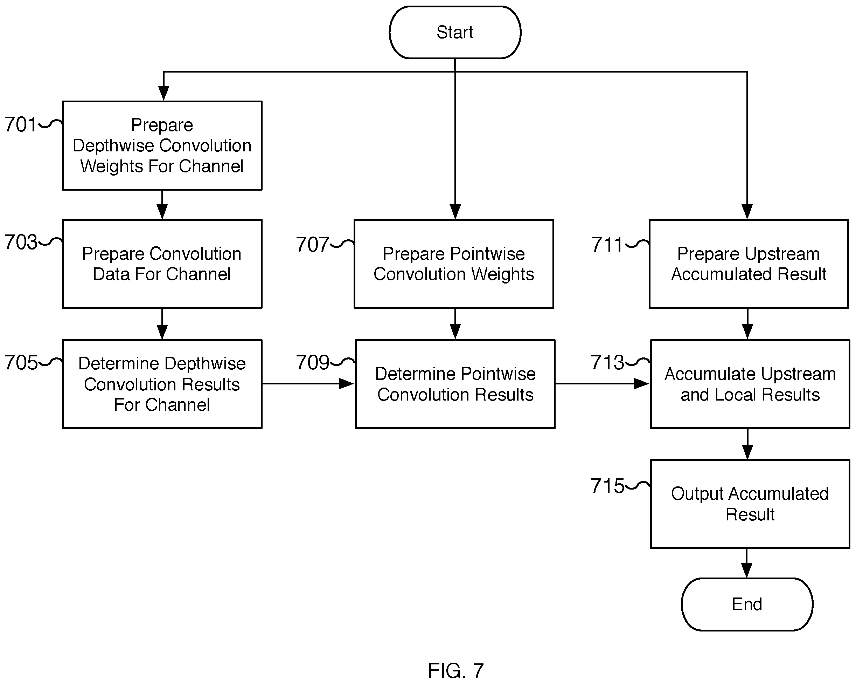

Figure 7 is a flow chart illustrating an embodiment of a pipelined process for performing convolution operations using a processor system. In the example shown, different portions of the process of Figure 7 are performed by different components of a processing element in parallel. For example, at least portions of the steps 701, 703, and/or 705 are performed by a dot product engine such as dot product engine 215 of Figure 2 and/or dot product engine 800 of Figure 8, at least portions of the steps 707 and/or 709 are performed by a pointwise convolution unit such as element-wise multiplication unit 217 of Figure 2, and/or at least portions of the steps 711, 713, and/or 715 are performed by a reduction network including reduction network components such as reduction unit 219 and point-to-point connections 231 and 233 of Figure 2. In some embodiments, the process of Figure 7 is performed as part of the processes of Figures 3-6. For example, in some embodiments, the steps 701, 703, and/or 705 are performed at 601 of Figure 6, the steps 707 and/or 709 are performed at 603 of Figure 6, and/or the steps 711, 713, and/or 715 are performed at 605 and/or 607 of Figure 6.

At 701, depthwise convolution weights are prepared. For example, depthwise convolution weight matrices associated with a channel of a convolution data matrix are prepared. In some embodiments, a depthwise convolution weight matrix is converted from a two-dimensional weight matrix to a linearized weight input vector for a dot product engine. The prepared depthwise convolution weights are provided to a dot product engine. In some embodiments, each vector unit of a dot product engine receives input vectors corresponding to different matrix slices from the same channel of the data matrix but the same depthwise convolution weight matrix. In some embodiments, the depthwise convolution weights are prepared by a weight input unit of a dot product engine such as weight input unit 805 of Figure 8.

At 703, convolution data for a channel of a data matrix is prepared. For example, data elements from an assigned channel of a convolution data matrix are prepared as input to a dot product engine. The convolution data is a two-dimensional matrix slice of a data matrix and corresponds to a depthwise convolution weight matrix prepared at 701. In some embodiments, the convolution data is prepared as linearized data input vectors for a dot product engine. The prepared convolution data is provided to a dot product engine. In some embodiments, each vector unit of a dot product engine receives a different data input vector corresponding to a different portion of the data matrix, for example, a different matrix slice from the same channel of the data matrix. In some embodiments, the convolution data is prepared by a data input unit of a dot product engine such as data input unit 803 of Figure 8.

At 705, depthwise convolution results are determined for a channel of the data matrix. For example, a dot product engine unit performs depthwise convolution operations using the depthwise convolution weights prepared at 701 and the corresponding convolution data prepared at 703. In some embodiments, the dot product engine includes a group of calculation or vector units. Each vector unit can perform a portion of a depthwise convolution operation using the provided vector inputs. The results of the depthwise convolution operation are depthwise convolution partial result elements or partial depthwise convolution results. In some embodiments, the first depthwise convolution partial result element corresponds to the output of a first vector unit of a dot product engine, the second depthwise convolution partial result element corresponds to the output of a second vector unit, and so forth, for each vector unit of a dot product engine. In various embodiments, the output of the dot product engine is transmitted to and utilized as an input for step 709. For example, as depthwise convolution results are determined, the results are transmitted to a pointwise convolution unit, such as an element-wise multiplication unit, even as additional depthwise convolution results are being calculated.

In some embodiments, steps 703 and/or 705 continue as long as additional convolution data exists and remains to be processed into partial depthwise convolution results. As each new portion of convolution data is processed, the corresponding output results are transmitted to step 709. In some embodiments, the dot product engine is dot product engine 215 of Figure 2 and/or dot product engine 800 of Figure 8.

At 707, pointwise convolution weights are prepared. For example, pointwise convolution weights associated with partial depthwise convolution results are prepared. In some embodiments, the pointwise weights are data elements from one or more specific channels of a group of pointwise convolution weight filters. Each specific channel corresponds to a specific channel of the data matrix assigned to the corresponding dot product engine. In some scenarios, each processing element may process only a single channel of the data matrix along with its corresponding data elements from a corresponding channel of a group of pointwise convolution weight filters at any given time. In various embodiments, the pointwise weights are prepared by a pointwise convolution unit such as element-wise multiplication unit 217 of Figure 2. In some embodiments, each multiplication unit of the element-wise multiplication unit receives a different corresponding pointwise weight data element. In some embodiments, the number of pointwise convolution weight filters exceeds the size of the pointwise convolution unit and multiple iterations are required to process all corresponding weights. For example, in some embodiments, a 64-wide element-wise multiplication unit can process 64 different weight elements in parallel. In the event there are 128 pointwise convolution weight filters, a 64-wide element-wise multiplication unit requires two iterations to load the 128 weights corresponding to an assigned channel from the 128 different pointwise convolution weights filters.

At 709, pointwise convolution results are determined. For example, the partial depthwise convolution results from step 705 along with corresponding pointwise convolution weights from step 707 are used as inputs to a pointwise convolution unit. In some embodiments, the pointwise convolution unit is an element-wise multiplication unit such as element-wise multiplication unit 217 of Figure 2. At step 709, element-wise multiplication is performed to determine element-wise multiplication unit results that correspond to partial pointwise convolution results. The partial pointwise results determined by the element-wise multiplication unit at step 709 are transmitted to step 713. For example, a vector of results determined at 709 is transmitted to a reduction unit of the processing element where it can be accumulated with corresponding upstream results.

In some embodiments, each depthwise convolution partial result element of a vector of partial depthwise convolution results received from step 705 can be broadcasted to the multiplication units of an element-wise multiplication unit. Each multiplication unit performs a multiplication operation on the received depthwise convolution partial result element with a corresponding pointwise convolution weight. The result is a vector of element-wise multiplication unit results, where each result element corresponds to a different pointwise convolution weight filter. For example, in the event there are K pointwise convolution weight filters, each depthwise convolution partial result element is multiplied against a pointwise weight from each of the K filters to compute K results. In some embodiments, the number of filters (K) exceeds the size of the element-wise multiplication unit and an element-wise multiplication unit requires multiple iterations to compute the results for all K filters of the selected channel. For example, a 64-wide element-wise multiplication unit can compute 64 partial pointwise results in parallel. In the event there are 128 filters, two iterations are required to compute all 128 partial pointwise results.

In some embodiments, multiplication results for an iteration of each depthwise convolution partial result element from step 709 are first determined before looping back to compute another iteration using each of the same depthwise convolution partial result elements. For example, partial pointwise convolution results are computed for a second depthwise convolution partial result element before performing a second iteration with the first depthwise convolution partial result element. This allows the pointwise convolution weights loaded at each multiplication unit of the element-wise multiplication unit to be reused across multiple iterations with different depthwise convolution partial result elements. For example, in some embodiments, the first depthwise convolution partial result element can correspond to the output determined at step 705 of a first vector unit of a dot product engine. The first depthwise convolution partial result element is multiplied against the pointwise convolution weight data elements prepared at step 707 from a specific channel of a group of pointwise convolution weight filters. A vector of element-wise multiplication results is determined and outputted to step 713. The second depthwise convolution partial result element can correspond to the output determined at step 705 of a second vector unit of a dot product engine. The pointwise convolution weight data elements are reused and the second depthwise convolution partial result element is multiplied against the existing weights in the element-wise multiplication unit. A vector of element-wise multiplication results corresponding to the second depthwise convolution partial result element is determined and outputted to step 713. As each subsequent vector of element-wise multiplication results is determined, the results are transmitted to step 713. The process continues until all depthwise convolution partial result elements and corresponding pointwise convolution weights are processed. In some embodiments, an alternative approach is utilized and all partial pointwise convolution results for a specific depthwise convolution partial result element are computed before progressing to the next depthwise convolution partial result element.

In some embodiments, steps 707 and/or 709 continue as long as additional partial depthwise convolution results remain to be processed into partial pointwise convolution results. For example, as each new set of partial depthwise convolution results are determined at step 705, previously determined partial depthwise convolution results are utilized to determine and then transmit partial pointwise convolution results to step 713. In some embodiments, the pointwise convolution unit is element-wise multiplication unit 217 of Figure 2.

At 711, upstream element-wise multiplication results are prepared. For example, a group of element-wise multiplication results corresponding to different pointwise convolution weight filters is received from an upstream processing element. In some embodiments, the received results are accumulated results from two or more processing elements. In various embodiments, the upstream element-wise multiplication results are received via a point-to-point connection at a reduction unit, such as via point-to-point connection 231 and at reduction unit 219 of Figure 2. The received results may be a vector of partial pointwise convolution results determined using an element-wise multiplication unit of the upstream processing element. In some embodiments, the received results are results of an upstream reduction unit that merges results from its corresponding processing element's element-wise multiplication unit with upstream results.

At 713, upstream and local element-wise multiplication results are accumulated. For example, local partial pointwise convolution results computed by a local pointwise convolution unit at 709 are merged with upstream partial pointwise convolution results prepared and received at 711. In some embodiments, the local and upstream results are reduced by summing the two inputs together using a reduction unit such as reduction unit 219 of Figure 2. In various embodiments, for each pointwise convolution weight filter, the reduction unit sums together the partial results of different channels. In some embodiments, multiple results corresponding to different pointwise convolution weight filters are reduced in parallel. For example, the reduction unit sums the results corresponding to the different channels of the different pointwise convolution weight filters in parallel.

At 715, accumulated element-wise multiplication results are outputted. For example, the accumulated pointwise convolution results from 713 are outputted. In the event additional downstream partial pointwise convolution results are needed to complete the pointwise convolution operation, the results are transmitted from the reduction unit to a downstream processing element via a reduction network using a point-to-point connection. For example, in some embodiments, the results are transmitted from a processing element such as processing element 211 of Figure 2 to a downstream processing element such as processing element 221 of Figure 2 via a point-to-point connection such as point-to-point connection 233 of Figure 2. The transmitted results correspond to the running sum of partial pointwise convolution results for different pointwise convolution weight filters and will be summed together with corresponding downstream results.

In some embodiments, the results accumulated at 713 are final pointwise convolution results. For example, the processing element is the final processing element in the reduction network chain for the pointwise convolution operation. In some embodiments, the processing element is the one assigned to process the last channel of the data matrix and the upstream accumulated result received at 711 corresponds to the accumulated results for all the other channels of the data matrix. At 715, the final pointwise convolution results may be written to a memory location or another appropriate storage location instead of a downstream processing element. For example, the results may be written to shared memory to merge the results with other final results. In some embodiments, the results are outputted to a different storage location such as a scratchpad memory location or another processing component. In various embodiments, the final results correspond to convolution result elements for the original convolution problem solved using a combination of depthwise and pointwise convolution operations.

In some embodiments, steps 711, 713, and 715 continue as long as additional partial pointwise convolution results remain to be computed. For example, as new groups of partial pointwise convolution results are processed at 709, accumulated results from previously received partial pointwise convolution results are accumulated and then outputted. In various embodiments, the different steps of Figure 7 performed by the different components of the processing element operate in parallel and in a pipelined manner. This process allows the hardware components of the processing elements to be utilized in a more efficient manner and the technique significantly improves the performance for computing convolution problems.

Figure 8 is a block diagram illustrating an embodiment of a dot product engine for solving artificial intelligence problems using a neural network. In the example shown, dot product engine 800 includes data input unit 803, weight input unit 805, dot product processor unit 807, and output unit 809. In some embodiments, dot product engine 800 is a hardware integrated circuit, for example, an application specific integrated circuit (ASIC) and includes hardware components data input unit 803, weight input unit 805, dot product processor unit 807, and output unit 809. As compared to a general-purpose processor, dot product engine 800 is designed and implemented using a specialized hardware integrated circuit to more efficiently perform one or more specific computing tasks related to performing convolution operations and/or solving artificial intelligence problems using a neural network. The specialized hardware results in significant performance improvements and resource efficiencies gained over using a general-purpose processor. In some embodiments, dot product engine 800 is dot product engine 215 of Figure 2.

In the example shown, dot product processor unit 807 includes multiple vector calculation units including at least vector units 811 and 821 used to compute dot product results. Each vector unit includes at least a vector multiply unit and a vector adder unit. For example, vector unit 811 includes vector multiply unit 813 and vector adder unit 815 and vector unit 821 includes vector multiply unit 823 and vector adder unit 825. In various embodiments, dot product processor unit 807 includes at least the number of vector units to match the number of elements in an input data vector generated by data input unit 803. In some embodiments, dot product processor unit 807 is configured to perform multiple depthwise convolution operations and each vector unit of dot product processor unit 807 is configured to determine a dot product result from two input vectors, one provided by data input unit 803 and the other from weight input unit 805. The results are outputted to output unit 809, which can be used to write dot product results to memory or another local component such as an element-wise multiplication unit. For example, in some embodiments, each vector unit, such as vector units 811 and 821, receives two pairs of input vectors (not shown) corresponding to a data vector of data elements of a data matrix and a weight vector of depthwise convolution weights. The dot product result of the two input vectors is calculated and transmitted to output unit 809. In some embodiments, dot product processor unit 807 includes 32 vector units and 32 dot product results are determined and outputted to output unit 809. In various embodiments, dot product processor unit 807 may include another appropriate number of vector units. In the example shown, only two of the vector units of dot product processor unit 807 are illustrated. In various embodiments, the arrows of Figure 8 represent the direction data moves through the components of dot product engine 800. For example, the arrows may correspond to multi-element wide communication/data buses and/or data lines. In some embodiments, additional components of dot product engine 800 are not shown.

In some embodiments, dot product processor unit 807 is configured to perform depthwise convolution using its vector units. For example, data input unit 803 may receive a vector of data elements of a data matrix, such as a 2D matrix slice from a channel of a data matrix. For each received input vector, data input unit 803 can prepare a data input vector for a vector unit of dot product processor unit 807, such as one of vector units 811 and 821. Weight input unit 805 can prepare a depthwise convolution weight matrix as a weight input vector for each of the vector units of dot product processor unit 807. In some embodiments, a different data input vector is prepared for and sent to each vector unit (corresponding to a different matrix slice of the data matrix) but the same weight input vector is prepared and broadcasted to each vector unit. This allows the same weight matrix to be applied to different portions of the data matrix.

In some embodiments, data input unit 803 and/or weight input unit 805 includes shifting hardware (not shown) to shift the elements of the vector operands. For example, weight input unit 805 can be loaded with one or more vector operands that are used for a first iteration. During a second iteration, the vector operands can be shifted by one or more positions (to the right or left) as appropriate. The newly shifted vector operands can be used for vector unit computations. Once the vector unit computations are completed, the vector operands can be shifted again and the newly shifted vector operands can be used for the next iteration. In this manner, the new vector operands (determined by shifting the contents of the input vector) are applied during each iteration and may be stored or shifted in place in a weight input unit register (not shown). For example, in some embodiments, the shifting logic is utilized on an unrolled matrix operand, such as an unrolled weight matrix, to align the unrolled matrix operand with appropriate elements from a second matrix operand, such as an unrolled data matrix.

In some embodiments, dot product processor unit 807 includes multiple vector units that each include a vector multiply and a vector adder unit. Each vector multiply unit, such as vector multiply unit 813 or 823, is configured to multiply corresponding elements received via data input unit 803 and weight input unit 805. In some embodiments, the result is a vector of multiplication results. For example, for two 32-byte input vectors, the result of a vector multiply unit is a vector of 32 multiplication results. The first element of a data input vector prepared by data input unit 803 is multiplied with the first element of a weight input vector prepared by weight input unit 805. Similarly, the second element of the data input vector is multiplied with the second element of the weight input vector. In various embodiments, corresponding elements from a data input vector generated by data input unit 803 and a weight input vector generated by weight input unit 805 are multiplied in parallel. In various embodiments, the vector of multiplication results is passed to a vector adder unit of the vector unit. For example, vector multiply unit 813 passes its multiplication results to vector adder unit 815 and vector multiply unit 823 passes its multiplication results to vector adder unit 825.

In some embodiments, each vector adder unit, such as vector adder unit 815 or 825, is configured to compute the sum of the elements from an input vector. For example, the sum of each of the elements from a vector of multiplication results computed by vector multiply unit 813 is computed by vector adder unit 815. Similarly, the sum of each of the elements from a vector of multiplication results computed by vector multiply unit 823 is computed by vector adder unit 825. In some embodiments, the result of a vector adder unit is a dot product of the vectors used as input to the corresponding vector multiply unit. In various embodiments, each vector adder unit, such as vector adder units 815 or 825, is implemented as an adder tree. For example, the top level of an adder tree may add pairs of elements to determine a set of partial sums, such as adding elements 0 and 1 to determine a first partial sum and elements 2 and 3 to determine a second partial sum, etc. Each subsequent level may sum pairs of partial sums from the previous level until the last level computes a final result sum. In various embodiments, each adder tree computes partial sums in parallel to arrive at a result sum. The parallel operation significantly improves the efficiency of summing a vector of numbers. In various embodiments, multiple vector units can operate in parallel to compute multiple dot products in parallel, significantly improving the throughput of depthwise convolution operations.

In some embodiments, multiple instances of dot product engine 800 can operate in parallel to process the depthwise convolution results for different channels of a convolution data matrix. For example, each processing element and corresponding dot product engine can receive data elements from an appropriate channel of the data matrix and also receive corresponding depthwise convolution weight matrices associated with the received data matrix elements.

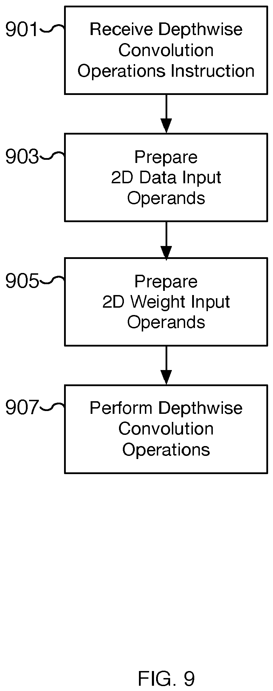

Figure 9 is a flow chart illustrating an embodiment of a process for performing two-dimensional convolution operations using a dot product engine. For example, a convolution operation is replaced with a combination of separable convolutions including a depthwise and a pointwise convolution. The process of Figure 9 describes how to solve the depthwise convolution in a pipelined manner that also feeds partial depthwise convolution results to a pipelined process for solving the pointwise convolution. In some embodiments, the process of Figure 9 is initiated based on a processing element receiving one or more convolution operation instructions and corresponding arguments such as data elements. The appropriate depthwise convolution operations may be initiated by issuing one or more two-dimensional convolution operation instructions. An instruction may indicate two operand matrices, for example, by specifying the location of each matrix operand in memory, in a register, or in another appropriate location. In some embodiments, the instruction corresponds to a depthwise convolution using a data (or activation) matrix and a weight matrix. In some embodiments, the convolution operation is performed using a dot product engine such as dot product engine 215 of Figure 2 and/or dot product engine 800 of Figure 8.

At 901, an instruction describing two-dimensional depthwise convolution operations is received. For example, an instruction is received by a processor element such as a processor element that includes a dot product engine, a pointwise convolution unit, a control logic unit, and/or a reduction unit, among other components. In various embodiments, the processor element may include additional or fewer components in addition to the dot product engine and the pointwise convolution unit. In some embodiments, the pointwise convolution unit is an element-wise multiplication unit. The received two-dimensional convolution operations instruction directs the processor element to perform one or more two-dimensional convolution operations. Each convolution operation specifies two matrix operands. For example, a first operand may be a two-dimensional data matrix slice of a data matrix and a second operand may be a depthwise convolution weight matrix. In some embodiments, the matrix operands may be too large for loading into the dot product engine without first splitting one or more of the matrix operands into smaller matrix slices. In some embodiments, the different convolution operations are specified using multiple instructions.

At 903, two-dimensional data input operands are prepared. For example, a two-dimensional data matrix is prepared as an operand for each convolution operation. The retrieved data may be certain rows and/or columns of a data input operand. In some embodiments, data corresponding to a two-dimensional data input operand is retrieved from memory or another location. In various embodiments, the preparation may include unrolling portions of a two-dimensional data input operand. For example, the specified portions of the data input matrix may be linearized into a vector. In some embodiments, only a portion of the matrix or matrix slice is linearized, for example, only a subset of the rows. In unrolling and linearizing the selected portions of the matrix, the rows may be separated by padding elements, such as zero elements, to at least in part align the selected matrix elements with corresponding elements from a weight input operand. In various embodiments, each prepared data input operand is loaded into a vector unit of a dot product engine. Depending on the input operand, additional portions of the corresponding matrix are unrolled, linearized, and loaded into the dot product engine. For example, a vector corresponding to a different (and possibly overlapping) portion of the two-dimensional data input operand is unrolled, linearized, and loaded into a different vector unit of the dot product engine. In some embodiments, the prepared data input operands are loaded using a data input unit such as data input unit 803 of Figure 8.

At 905, two-dimensional weight input operands are prepared. For example, a two-dimensional weight matrix is prepared as a second operand for each convolution operation. In some embodiments, data corresponding to the two-dimensional weight input operand is retrieved from memory or another location. The retrieved weight data may be certain rows and/or columns of the weight input operand and may correspond to a particular depthwise convolution weight matrix. In various embodiments, the preparation may include unrolling portions of the two-dimensional weight input operand. For example, the specified portions of the weight input matrix may be linearized into a vector. In some embodiments, only a portion of the matrix or matrix slice is linearized, for example, only a subset of the rows. In unrolling and linearizing the selected portions of the matrix, the rows may be separated by padding elements, such as zero elements, to at least in part align the selected matrix elements with corresponding elements from the data input operand. The number of padding elements may vary at least in part based on data sizes supported by the dot product engine and the dimensions of the weight input matrix. In various embodiments, the prepared weight input operand is loaded into a vector unit of the dot product engine. In some embodiments, the prepared weight input operand is broadcasted and loaded into multiple vector units of the dot product engine. For example, the same weight input operand can be broadcasted to every vector unit of the dot product engine. In some embodiments, the prepared weight input operand is loaded using a weight input vector such as weight input unit 805 of Figure 8.

At 907, two-dimensional depthwise convolution operations are performed. Using the data input operands and the weight input operands prepared at 903 and 905, respectively, two-dimensional convolution operations are performed by the dot product engine. The convolution operation may include computing partial and/or intermediate results across different iterations. As each partial depthwise convolution result is computed, the result is passed to a pointwise convolution unit, such as an element-wise multiplication unit. For example, a dot product result corresponding to the dot product of a 2D matrix slice of the data matrix and a depthwise convolution weight matrix is passed to the pointwise convolution unit before computing the next dot product result corresponding to a different 2D matrix slice of the data matrix. In various embodiments, the dot product engine provides a vector of output results as an output vector. For example, each vector unit computes the results or partial results of a corresponding convolution operation in parallel with other vector units and the results are outputted as an output vector of partial depthwise convolution results. In some embodiments, the output vectors are received by an output unit such as output unit 809 of Figure 8. In some embodiments, the complete two-dimensional convolution operation may involve shifting the elements of the weight input operand to at least in part compute the depthwise convolution of the weight input matrix with different portions of the data input matrix.

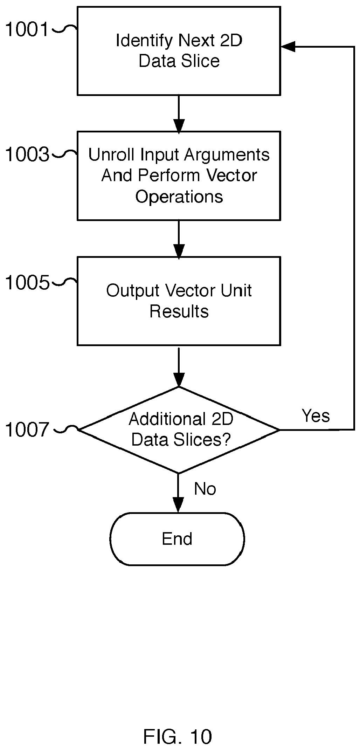

Figure 10 is a flow chart illustrating an embodiment of a process for performing a two-dimensional convolution operation using a dot product engine. For example, the result of a two-dimensional convolution operation is computed by performing multiple vector operations on two-dimensional slices of matrix arguments. One or more input arguments, such as a data input matrix, may exceed the maximum operand size of a dot product engine. As a result, an input operand may be sliced into smaller matrices compatible with the operand size of a dot product engine. The compatible-sized slices can be passed as operands to a dot product engine. In various embodiments, the process of Figure 10 may be performed in response to a convolution operations instruction such as the depthwise convolution operations instruction received at 901 of Figure 9. In some embodiments, the process of Figure 10 is performed at 903, 905, and/or 907 of Figure 9. In some embodiments, the process of Figure 10 is performed using a dot product engine such as dot product engine 215 of Figure 2 and/or dot product engine 800 of Figure 8.

At 1001, the next two-dimensional slice of a matrix operand is identified. For example, one or more matrix operands with sizes compatible with the operand size of a dot product engine are identified. The slices may be identified in memory and a read request may be issued to load the identified data. In some embodiments, it may be common for the size of the data input matrix to be extremely large compared to the size of the weight input matrix. The data input matrix is sliced into smaller sizes for processing. In some embodiments, the data input matrix is sliced into slices based on the number of vector units allocated to the convolution operation. At 1001, the next slice is identified for processing.

At 1003, the input arguments are unrolled and vector operations are performed. For example, a slice of a data input matrix and a weight input matrix are unrolled. In various embodiments, the unrolling linearizes a two-dimensional matrix (or matrix slice) into a vector operand that is loaded into at least one vector unit of a dot product engine. The unrolling may require more than one iteration. For example, in some embodiments, the unrolled matrix operand is unrolled over several iterations such that only a subset of rows is unrolled for each iteration. For example, for larger weight matrices, the weight matrix cannot be unrolled to fit in its entirety in a vector unit. Multiple iterations are utilized until the entire matrix is unrolled. In various embodiments, the weight matrix may be unrolled into a vector operand and broadcasted to more than one vector unit of the dot product engine. In some embodiments, each iteration may further include shifting the unrolled weight matrix to apply the elements of the weight matrix to different columns of the unrolled data matrix. The vector operations performed can include a vector multiply and a vector add. For example, a dot product operation can be performed on vector data and weight arguments by each vector unit of a dot product engine to compute at least a portion of a depthwise convolution result.

At 1005, the vector unit results are outputted. For example, each vector unit outputs a vector unit result to an element of an output vector. The output vector may be stored in an output unit such as output unit 809 of Figure 8. As results are computed, the vector unit results can be transmitted by the output unit in a pipelined manner to a pointwise convolution unit. In some embodiments, the depthwise convolution results may be determined over multiple iterations and depthwise convolution partial result elements are outputted at each iteration to a pointwise convolution unit. In some embodiments, each vector unit result is a partial depthwise convolution result and a depthwise convolution partial result element.

At 1007, a determination is made whether additional two-dimensional slices require processing. In the event additional two-dimensional slices remain to be processed, processing loops back to 1001 to process the next slice. In the event no additional two-dimensional slices remain to be processed, processing ends.

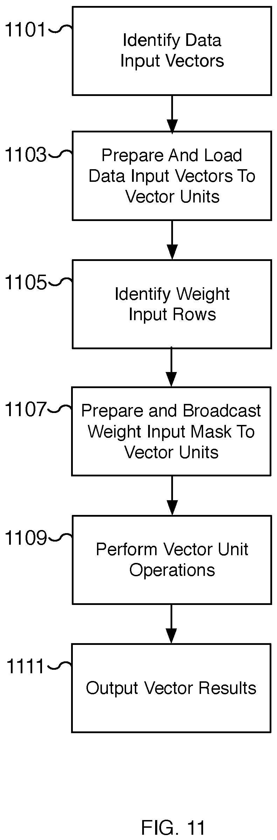

Figure 11 is a flow chart illustrating an embodiment of a process for performing a two-dimensional depthwise convolution operation using a dot product engine and vector unit operations. For example, using the process of Figure 11, input matrices are unrolled, linearized, and fed as input vectors to vector units of a dot product engine. Vector unit operations are performed to compute at least a partial result for the two-dimensional convolution operation. In various embodiments, a data input matrix and a weight input matrix are converted to input vectors. For example, a data slice may be identified from a data input matrix and converted to one or more data input vectors. Similarly, a depthwise convolution weight matrix is identified and converted to a weight input vector. In some embodiments, the process of Figure 11 is performed at 1003 and/or 1005 of Figure 10. In some embodiments, the process of Figure 11 is performed using a dot product engine such as dot product engine 215 of Figure 2 and/or dot product engine 800 of Figure 8. In various embodiments, as partial depthwise convolution results are computed, the results can be outputted to a separate component, such as a pointwise convolution unit, to perform pipelined convolution operations.

At 1101, data input vectors are identified. For example, one or more data input vectors are identified from a slice of a data input matrix. In some embodiments, a data input vector is identified and prepared for each vector unit of a dot product engine. The data input vectors may include overlapping elements and correspond to selected elements used for performing a matrix operation, such as a two-dimensional depthwise convolution operation.

At 1103, data input vectors are prepared and loaded to vector units. For example, elements corresponding to a subset of a data matrix are identified. In some embodiments, the data matrix may be a two-dimensional matrix slice of a larger data matrix. In various embodiments, the identified elements are a subset of the data matrix and selected based on a corresponding weight matrix and in particular the dimensions of the weight matrix and the number of rows that will be unrolled. For example, in some embodiments, an entire weight matrix can be unrolled and linearized to fit into a vector unit operand. However, as the dimensions of the weight matrix increase relative to the size of operands supported by the vector unit, the weight matrix may be too large to be unrolled into a single input vector and instead the weight matrix and corresponding data matrix are unrolled across multiple iterations.

In various embodiments, a weight matrix is either fully unrolled in one iteration or can be partially unrolled across multiple iterations. Whether a matrix is fully or partially unrolled can depend on the dimensions of the matrix arguments, in particular the weight matrix, relative to the size of the supported input vectors for the dot product engine. For example, in a scenario with a 3x3 weight matrix and support for a 32-element input vector, all nine elements (corresponding to three rows) of the weight matrix can be unrolled into a single 32-element weight input vector. As part of preparing a corresponding data input vector, elements from columns corresponding to three rows of the data matrix are selected. The selected elements from three rows are unrolled into a one-dimensional vector. The number of columns utilized may be based on the size of the data input vector. In the example scenario with a 32-element data input vector, three rows are identified and 10 elements (corresponding to 10 columns) for each row are selected. A total of 30 elements are selected from three rows and ten columns. The remaining two locations in the data input vector for two elements are insufficient to fit an entire column from the identified three rows and instead are padded, for example, with two zero-value elements. In this manner, a 3x10 portion of a data matrix can be unrolled and linearized into a data input vector and padded with two zero-value elements. Once prepared, the data input vector is loaded to an appropriate vector unit of the dot product engine. In various embodiments, each vector unit of the dot product engine is loaded with a prepared data input vector. For example, each vector unit of the dot product engine can be loaded by selecting elements starting with a different row.

In some embodiments, the initial number of columns to select from for preparing a data input vector is determined by dividing the size of the data input vector by the number of rows being unrolled. For example, in the event two, three, or four rows are being unrolled, a 32-element data input vector can be loaded with elements from sixteen, ten, or eight columns, respectively. Any unused elements of the data input vector can be filled with zero-value elements as padding. Once the number of columns is determined, each iteration can utilize the same number of columns. For example, a 7x7 matrix can be loaded into a 32-element data input vector over four iterations. For the first three iterations, two rows (i.e., rows 1-2, 3-4, and 5-6) are unrolled each iteration and the last row (i.e., row 7) is unrolled for the fourth iteration. Each iteration can select 16 elements from different columns for the corresponding selected rows. The last iteration has additional padding since only one row is being unrolled. In various embodiments, zero-value elements are used as padding elements. A padding element with a value of zero allows the vector unit to perform multiply and addition vector operations with no impact on a resulting vector sum or dot product result.

In various embodiments, once properly prepared using the appropriate format, a data input vector is loaded into a corresponding vector unit of the dot product engine. In some embodiments, a data input vector is prepared and loaded into each of the vector units of the dot product engine. For example, the data input vector prepared for each vector unit can correspond to a sub-matrix of a data input matrix with each sub-matrix starting at a different row of the data input matrix. For example, in the event the weight matrix is a fully unrolled 3x3 matrix, the first vector unit may correspond to a sub-matrix with elements from rows 1-3, the second vector unit may correspond to a sub-matrix with elements from rows 2-4, the third vector unit may correspond to a sub-matrix with elements from rows 3-5, and so forth. In an embodiment, with 32 vector units, the 32nd vector unit may correspond to a sub-matrix with elements from rows 32-34.

At 1105, weight input rows are identified. For example, one or more rows from a weight input matrix are identified for performing vector unit operations. In some embodiments, a weight input matrix is fully unrolled and each row of the weight input matrix is identified for unrolling. In various embodiments, a weight input matrix may be too large for full unrolling and is only partially unrolled. Only the rows selected for unrolling are identified for further processing at 1107. For example, a 3x3 weight matrix (with 9 elements) can be fully unrolled into a 32-element weight input vector so each row of the weight matrix is utilized. As another example, a 7x7 weight matrix (with 49 elements) cannot be fully unrolled into a 32-element weight input vector. Only the unrolled rows are identified for the current iteration. In various embodiments, successive iterations are used to identify the remaining rows.

At 1107, a weight input mask is prepared and broadcasted to vector units. For example, elements corresponding to the weight input rows identified at 1105 are prepared into a weight input mask. The weight input mask is linearized as a one-dimensional input vector for the vector units of the dot product engine. In various embodiments, the linearized weight elements are formatted with padding to align the start of each weight input row with an associated data input row prepared at 1103. For example, using a 32-element vector and a 3x3 weight matrix with all rows identified at 1105, all nine elements of the weight matrix are selected. The nine elements of the weight matrix are formatted into a weight input mask using an additional 23 padding elements. In some embodiments, 30 elements are used for the three rows of the selected 3x3 matrix. Each row includes three elements from a row followed by seven padding elements. The remaining elements of a data input vector not used for the rows of the selected 3x3 matrix, in this example, two elements, are filled with additional padding elements. In various embodiments, zero-value elements are used as padding elements. A padding element with a value of zero allows the vector unit to perform multiply and addition vector operations with no impact on a resulting vector sum.

In various embodiments, the formatted weight input mask is an input vector that is broadcasted to multiple vector units of a dot product engine. For example, a weight input vector is used to store the prepared weight input mask in a linearized one-dimensional vector format. The weight input mask is then broadcasted to each appropriate vector unit as an input vector operand. For example, a single weight input mask can be prepared and utilized by all the vector units of a dot product engine. In some embodiments, the row padding elements are utilized to allow the weight input mask to be shifted to realign the elements of the weight matrix with different columns of a data matrix as referenced in a data input vector.

At 1109, vector unit operations are performed. Utilizing the input vectors loaded from data input vectors and the broadcasted weight input mask, the corresponding vector units of a dot product engine perform vector unit operations. In some embodiments, the vector unit operations include vector multiply and addition operations. For example, each element from a data input vector is multiplied by its corresponding element from the weight input mask. The result is a vector of multiplication results. In some embodiments, the vector multiplication operation is performed by a vector multiply unit of a vector unit. Using the vector multiply result, a vector sum result is calculated by adding each of the elements from the vector of multiplication results. In some embodiments, the sum is determined using a vector adder unit of the vector unit. For example, a vector adder unit using an adder tree can compute the sum of the vector elements. In some embodiments, the matrix processor unit includes an accumulator for adding the vector adder result with previous vector adder results. For example, intermediate or partial results from each iteration can be accumulated to determine a running accumulated sum using an accumulator. The accumulated sum allows the vector sum result from one iteration (or pass) to be added into the result of a subsequent iteration (or pass). In various embodiments, the zero-padded elements prepared for the weight input mask (and/or data input vector) result in a zero multiplication result and have no impact on the vector addition result. In some embodiments, each vector unit of a dot product engine performs a dot product operation using its corresponding loaded data input vector and the broadcasted weight input mask. The dot product result may be accumulated with the results from previous iterations (or passes) and/or stored to be added to the results of future iterations. In various embodiments, the dot product result is a depthwise convolution partial result element.

At 1111, vector results are outputted. For example, the vector result determined by performing vector unit operations at 1109 is outputted from the dot product engine. In some embodiments, the vector results are outputted to an output vector result that is used to write the output to memory, another component of the processing element, or another appropriate location. In some embodiments, the results are outputted and used as an argument to a subsequent operation. For example, a vector of depthwise convolution partial result elements can be outputted to a pointwise convolution unit, such as an element-wise multiplication unit, for performing at least a portion of a pointwise convolution operation.

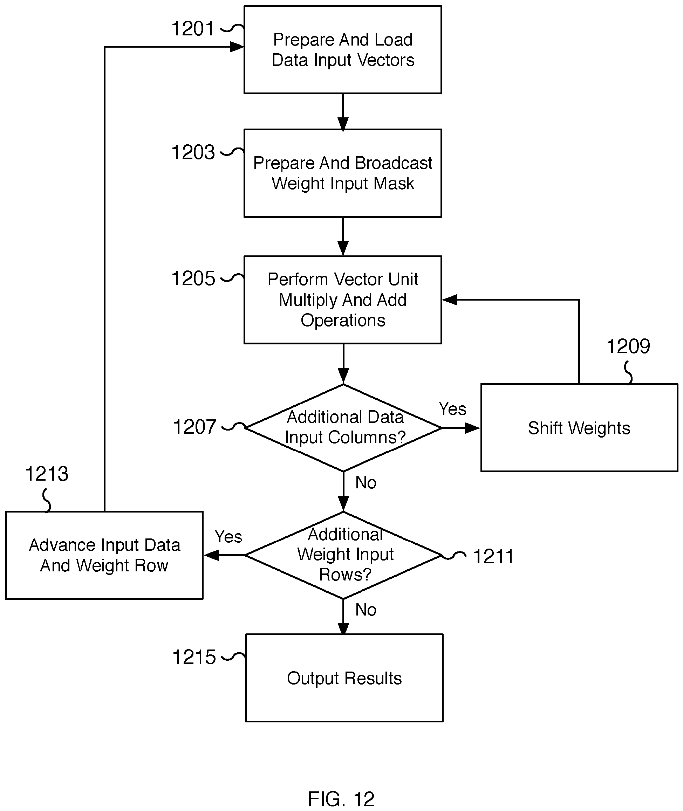

Figure 12 is a flow chart illustrating an embodiment of a process for performing a two-dimensional depthwise convolution operation using a dot product engine and vector unit operations. For example, using a data input matrix and a data weight matrix, matrix multiply and add operations are performed to compute at least a partial result for the two-dimensional convolution operation. The input matrices are unrolled, linearized, and fed as input vectors to vector units of a dot product engine. Weight input matrices that do not fit the size of an input vector are partially unrolled across different iterations. To further increase the throughput and efficiency of the matrix computations, additional passes are performed by shifting the unrolled input weight mask to realign the elements of the weight mask with different elements (and corresponding columns) of loaded data input vectors. By reusing prepared data input vectors with realigned weight masks, the impact on performance related to data transfers, especially from loading elements from a data input matrix to the dot product engine, is significantly reduced. For example, multiple passes are performed on each data input vector for each iteration of an input weight mask by only modifying the input weight mask while keeping the loaded data input vectors unchanged. In some embodiments, the process of Figure 12 is performed using the process of Figure 11. For example, in some embodiments, the steps 1205, 1207, and/or 1209 may be performed at 1109 of Figure 11. In some embodiments, the process of Figure 12 is performed using a dot product engine such as dot product engine 215 of Figure 2 and/or dot product engine 800 of Figure 8. In various embodiments, as partial depthwise convolution results are computed, the results can be outputted to a separate component, such as a pointwise convolution unit, to perform pipelined convolution operations.

At 1201, data input vectors are prepared and loaded into a dot product engine. In some embodiments, the data input vectors are prepared and loaded as described with respect to steps 1101 and 1103 of Figure 11. For example, the data input vectors are loaded to be compatible with the corresponding rows of a weight input vector. In some embodiments, the data input vectors include padding elements such as zero-value elements to prevent loading partial columns of elements. As an example, using a 3x3 weight input matrix and a 32-element data input vector, a fully unrolled weight input matrix references three rows. Correspondingly, three rows of data elements are loaded into a data input vector. The number of three-row columns depends on the available number of elements from the data input vector. In the example, ten three-row columns are loaded for a total of 30 elements. The two remaining elements of the data input vector are unused and may be zeroed out with zero-value elements. The next data input vector can be loaded starting with the next corresponding row from the data matrix. In this manner, data input vectors from different (but possibly overlapping) slices of a data matrix are loaded into different vector units of the dot product engine. As another example, using a 7x7 weight input matrix and a 32-element data input vector, a partially unrolled weight input matrix references two rows for each of the first three iterations and a single final row for the fourth iteration. Correspondingly, two rows of data elements are loaded into a data input vector for the iterations with two weight rows and one row of data elements is loaded into a data input vector for the final iteration using the last (and seventh) weight row. The number of two-row columns depends on the available number of elements from the data input vector. In the example, sixteen two-row columns are loaded for a total of 32 elements for the first three iterations with no padding elements needed. For the fourth iteration, sixteen elements from a single row are loaded and the sixteen remaining elements of the data input vector are unused and may be zeroed out with zero-value elements. Similar to the 3x3 weight matrix example, within each iteration, the next data input vector can be loaded starting with the next corresponding row from the data matrix. In the 7x7 weight input matrix example, data input vectors from different (but possibly overlapping) slices of a data matrix are loaded into different vector units of the dot product engine either two rows (for the first three iterations) or one row (for the final and fourth iteration) at a time.

At 1203, a weight input mask is prepared and broadcasted to one or more vector units of the dot product engine. In some embodiments, the weight input mask is prepared and broadcasted as described with respect to steps 1105 and 1107 of Figure 11. For example, for a fully unrolled weight matrix, each row of the weight matrix is unrolled and linearized into an input vector. To improve the efficiency of the matrix operations, zero padded elements are used to evenly space out the rows of the weight matrix within the input vector. As described above, the zero-padded elements allow the weight input vector to act as a weight input mask. Shifting the weight elements realigns the weight input mask to associate the weight elements with different corresponding columns from the data matrix. In some scenarios, the weight mask is padded to account for incomplete corresponding data columns. Once loaded into a weight input vector, the weight input mask is broadcasted to one or more applicable vector units of the dot product engine.

In some embodiments, a weight matrix is only partially unrolled. Over multiple iterations, all the rows of the weight matrix are unrolled. For a particular iteration, the selected rows are unrolled and padded with zero-value elements to create a partial weight mask associated with the selected rows. Subsequent iterations (or iterations performed in parallel) are used to unroll the remaining weight rows. For example, a 7x7 weight matrix (with 49 elements) cannot be fully unrolled into a 32-element weight input vector. Only the unrolled rows are identified for the current iteration. If at most two rows are unrolled, then four iterations are needed to fully unroll a 7x7 weight matrix. In some embodiments, different numbers of rows are selected for partial unrolling. For example, two, three, or more rows may be selected for unrolling as appropriate based on the weight matrix dimensions and the vector argument size of a vector unit.

At 1205, vector unit multiply and add operations are performed. In some embodiments, the vector unit operations are described with respect to step 1109 of Figure 11. Utilizing the input vectors loaded from data input vectors and the broadcasted weight input mask, the corresponding vector units of a dot product engine perform vector unit operations including vector multiply and add operations. Each vector unit may perform a vector multiply using the data input vector and the weight input mask. Unmasked elements result in multiplying the weight matrix elements against data matrix elements while masked out elements result in a zero value result. In various embodiments, the multiplication results are added using a vector adder to compute a resulting sum. For example, a 32-element vector unit receives two 32-element input vectors (a data input vector and a weight input mask) and performs a vector multiply to compute 32 multiplication results. A vector add operation is performed to add all 32 multiplication results to compute a single result sum. In some embodiments, the resulting sum is an intermediate result and is added to a previously computed result sum. For example, an accumulator may be used to store the resulting sum and on successive iterations the intermediate result is added to the currently computed result sum to keep a running sum across multiple iterations.

In some embodiments, each vector unit performs its vector operations in parallel. For example, a dot product engine with 32 vector units can compute 32 results corresponding to 32 result sums. In various embodiments, each vector unit of a dot product engine performs a dot product operation using its corresponding loaded data input vector and the broadcasted weight input mask. The dot product result may be accumulated with the results from previous iterations (or passes) and/or stored to be added to the results of future iterations.

In various embodiments, as depthwise convolution partial result elements are computed, the result elements are outputted to a downstream component, such as a pointwise convolution unit, for performing pointwise convolution operations. For example, a vector result corresponding to a vector of depthwise convolution partial result elements is determined by performing vector multiply and add operations by different vector units. The vector results are outputted from the dot product engine for a downstream component to process while the dot product engine begins to compute additional results. In some embodiments, during each pass through step 1205, a column of partial depthwise convolution results is determined and the corresponding results are outputted.

At 1207, a determination is made whether additional columns of the data input matrix remain to be processed. In the event additional columns of the data input matrix remain to be processed, processing proceeds to 1209. In the event no additional columns of the data input matrix remain to be processed, processing proceeds to 1211.

At 1209, the weights corresponding to each weight input vector are shifted. For example, the elements of a vector input mask are shifted to realign the weight elements with different data elements from data input vectors. For example, existing data input vectors loaded at 1201 are used in an additional pass with a new weight input vector. A new weight input vector is prepared by shifting the weight elements, for example, by shifting each weight element to the right by one element. The shift realigns the weight elements with data elements corresponding to the next column. For example, a weight input mask corresponding to a 3x3 weight matrix may be loaded into a vector unit along with a data input vector corresponding to a 3x10 slice of the data matrix. Shifting the weight elements effectively slides the weight input mask to associate the weight matrix with a different three columns from the 3x10 slice. With a 3x3 weight matrix, eight passes (corresponding to seven shifts) can be performed before reaching the end of the data slice. As another example, using a 7x7 weight matrix with two unrolled weight rows, each data input vector references 16 columns. Ten passes (corresponding to nine shifts) can be performed before reaching the end of the data slice. By spacing out the weight elements with padding elements in the weight input vector, the number of padding elements determines the maximum number of shifts (and passes) that can be performed with the loaded data input vectors.

In various embodiments, once a weight input vector is shifted, the newly prepared weight input vector is broadcasted to each applicable vector unit. Processing proceeds to 1205 where matrix operations are performed using a realigned weight input mask and a previously loaded data input vector.

At 1211, a determination is made whether additional rows of a weight input matrix remain to be processed. In the event additional rows of a weight input matrix remain to be processed, processing proceeds to 1213. For example, partially unrolled matrices may have additional rows that need to be unrolled and processed. In contrast, a fully unrolled weight matrix will not have additional weight rows for processing. In the event no additional rows of a weight input matrix remain to be processed, processing proceeds to 1215.

At 1213, data input and weight rows are advanced. For example, for a partially unrolled weight (and corresponding data) matrix, the identified rows are advanced to select the next set of rows for unrolling. Both the weight and data matrices are advanced together in order to associate the correct weight and data elements together. Using a 7x7 weight matrix as an example and unrolling at most two rows each iteration, the first iteration selects rows 1 and 2. At 1211, additional weight input rows remain to be processed so at step 1213, the selected rows are advanced to select rows 3 and 4. A subsequent iteration selects rows 5 and 6. A final iteration selects row 7. Processing then proceeds to 1201.

At 1215, results are outputted. In some embodiments, the results are outputted as described with respect to step 1111 of Figure 11. For example, the vector result determined by performing the vector multiply and add operations at 1205 is outputted from the dot product engine. In various embodiments, the vector results are outputted as an output vector result, for example, to an output unit such as output unit 809 of Figure 8. The output vector unit may be used to write the output vector result to memory, another component of the processing element, or another appropriate location. In some embodiments, the results are outputted and used as an argument to a subsequent convolution operation. For example, a vector of depthwise convolution partial result elements can be outputted to a pointwise convolution unit, such as an element-wise multiplication unit, for performing at least a portion of a pointwise convolution operation.

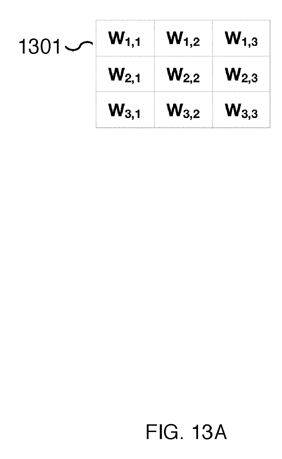

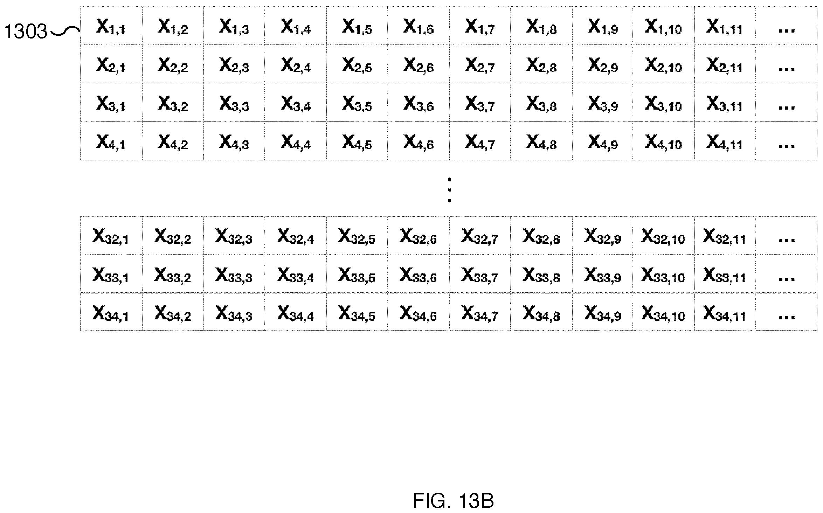

Figures 13A and 13B are diagrams illustrating example matrix operands for performing depthwise convolution. In Figure 13A, weight matrix 1301 represents an exemplar 3x3 matrix of weight elements. Other dimensions for a weight matrix may be appropriate as well, such as 1x1, 5x5, 7x7, 9x9, etc. In the example shown, the subscripts associated with each weight element use a row and column notation. For the first row of weight matrix 1301, W_{1,1} is the weight element located at column 1, W_{1,2} is the weight element located at column 2, and W_{1,3} is the weight element located at column 3. In Figure 13B, data matrix 1303 represents an exemplar data matrix of data elements. The dimensions of data matrix 1303 are larger than weight matrix 1301. In the example of Figure 13B, only rows 1-4 and 32-34 of data matrix 1303 are shown. The width of data matrix 1303 can extend past 11 columns. Similarly, the height of data matrix 1303 can extend past 34 rows (not shown). In Figure 13B, data matrix 1303 is shown with 34 rows to make it compatible with 3x3 weight matrix 1301 and a dot product engine with 32 vector units. In some embodiments, weight matrix 1301 and data matrix 1303 are input matrices for performing convolution operations using the techniques described herein. In some embodiments, the convolution operations, such as a depthwise convolution, are performed on weight matrix 1301 and data matrix 1303 using dot product engine 215 of Figure 2 and/or dot product engine 800 of Figure 8 and/or the processes of Figures 9-12. For example, the convolution operation instruction received at 901 of Figure 9 may specify a weight matrix such as weight matrix 1301 and a data matrix such as data matrix 1303. In some embodiments, weight matrix 1301 is a depthwise convolution weight matrix and data matrix 1303 is a single channel of a 3D convolution data matrix corresponding to weight matrix 1301.

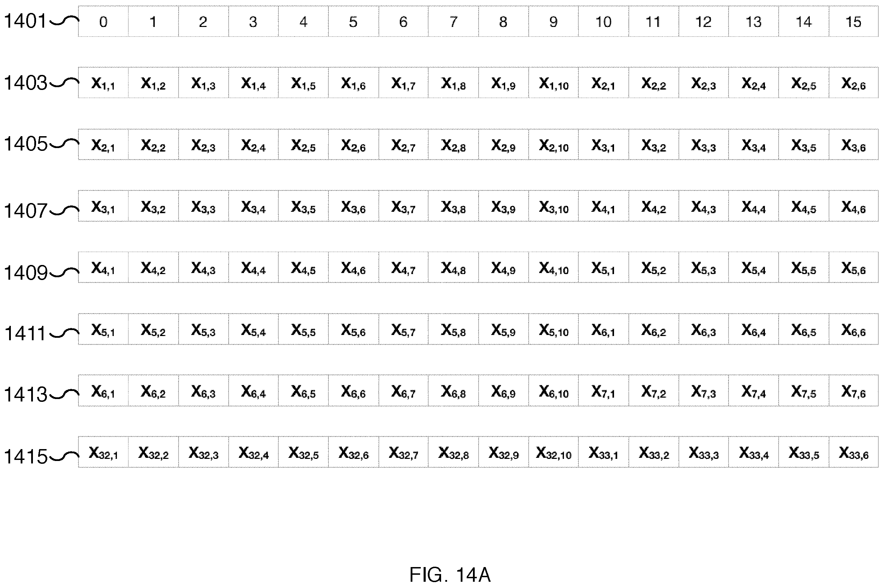

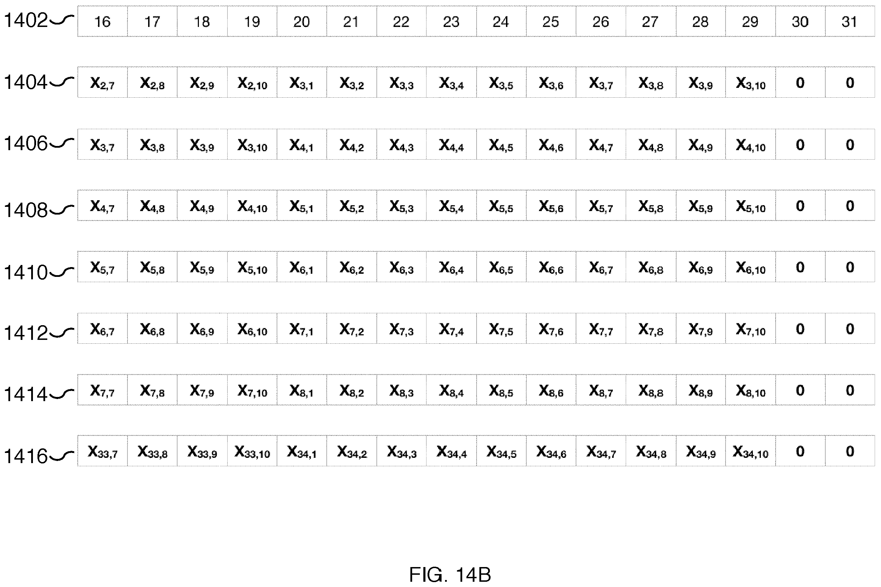

Figures 14A and 14B are diagrams illustrating an example of an unrolled data matrix for performing depthwise convolution. Figures 14A and 14B include index labels 1401 and 1402 that indicate the location of a data element in a 32-element data input vector. Figures 14A and 14B include seven example data input vectors 1403/1404, 1405/1406, 1407/1408, 1409/1410, 1411/1412, 1413/1414, and 1415/1416. The first half of each data input vector is shown in Figure 14A and the corresponding second half of each input vector is shown in Figure 14B. Due to the large size of the vectors, for ease of illustration, the data input vectors are illustrated as vector pairs and split across Figures 14A and 14B. For example, the seven 32-element data input vectors include 16-element vector pairs 1403/1404, 1405/1406, 1407/1408, 1409/1410, 1411/1412, 1413/1414, and 1415/1416.

In some embodiments, the data input vectors shown in Figures 14A and 14B are data input vectors unrolled from data matrix 1303 of Figure 13B. For example, data input vector 1403/1404 corresponds to elements from the first three rows of data matrix 1303 of Figure 13B unrolled into a 1-dimensional vector and includes data elements from rows 1-3 and columns 1-10 of data matrix 1303. Similarly, referencing elements from columns 1-10 of data matrix 1303 of Figure 13B, data input vector 1405/1406 corresponds to elements from rows 2-4, data input vector 1407/1408 corresponds to elements from rows 3-5, data input vector 1409/1410 corresponds to elements from rows 4-6, data input vector 1411/1412 corresponds to elements from rows 5-7, data input vector 1413/1414 corresponds to elements from rows 6-8, and data input vector 1415/1416 corresponds to elements from rows 32-34. Data elements associated with different 3x10 slices of data matrix 1303 of Figure 13B are loaded into each of data input vectors 1403/1404, 1405/1406, 1407/1408, 1409/1410, 1411/1412, 1413/1414, and 1415/1416. Elements at locations 30 and 31 (the 31st and 32nd elements) of each of data input vectors 1403/1404, 1405/1406, 1407/1408, 1409/1410, 1411/1412, 1413/1414, and 1415/1416 are zero-value elements. In various embodiments, elements at locations 30 and 31 are padding elements.

In some embodiments, each of the data input vectors of Figures 14A and 14B are loaded into separate vector units of a dot product engine. For a dot product engine with 32 vector units, 32 data input vectors are loaded and each may be prepared by starting with a different row. In the example shown, data input vectors 1403/1404, 1405/1406, 1407/1408, 1409/1410, 1411/1412, and 1413/1414 are loaded into the first six vector units and data input vector 1415/1416 is loaded into the 32nd vector unit. Although not shown, vector units 7-31 are loaded with corresponding data input vectors. In some embodiments, data input vectors 1403/1404, 1405/1406, 1407/1408, 1409/1410, 1411/1412, 1413/1414, and 1415/1416 are generated and loaded into a dot product engine, such as dot product engine 215 of Figure 2 and/or dot product engine 800 of Figure 8, by a data input unit such as data input unit 803 of Figure 8. In some embodiments, the unrolling process to create data input vectors 1403/1404, 1405/1406, 1407/1408, 1409/1410, 1411/1412, 1413/1414, and 1415/1416 is performed at 903 of Figure 9, at 1001 and/or 1003 of Figure 10, at 1101 and/or 1103 of Figure 11, and/or at 1201 of Figure 12. In some embodiments, the data input vectors of Figures 14A and 14B represent a partial set of data input vectors prepared for one iteration of an unrolling process and are formatted to be aligned with a fully unrolled 3x3 weight matrix such as weight matrix 1301 of Figure 13A.

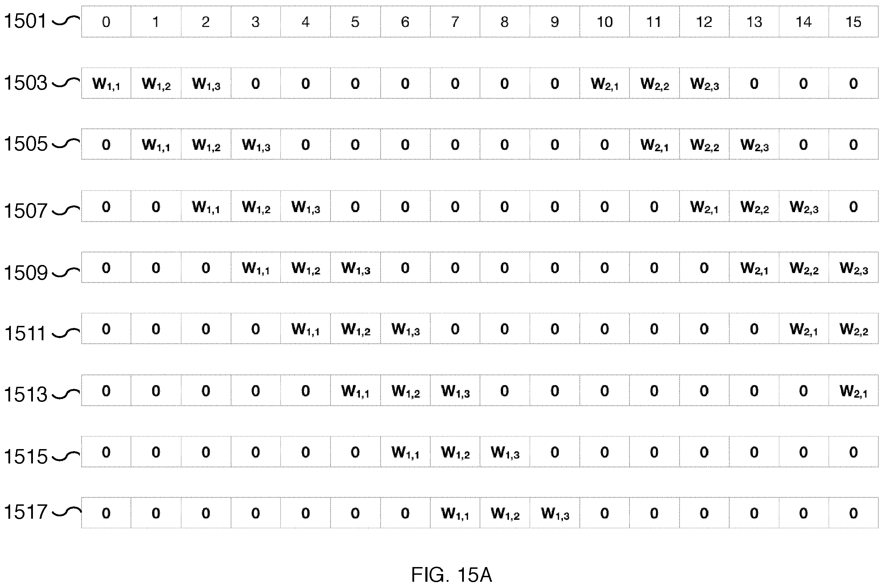

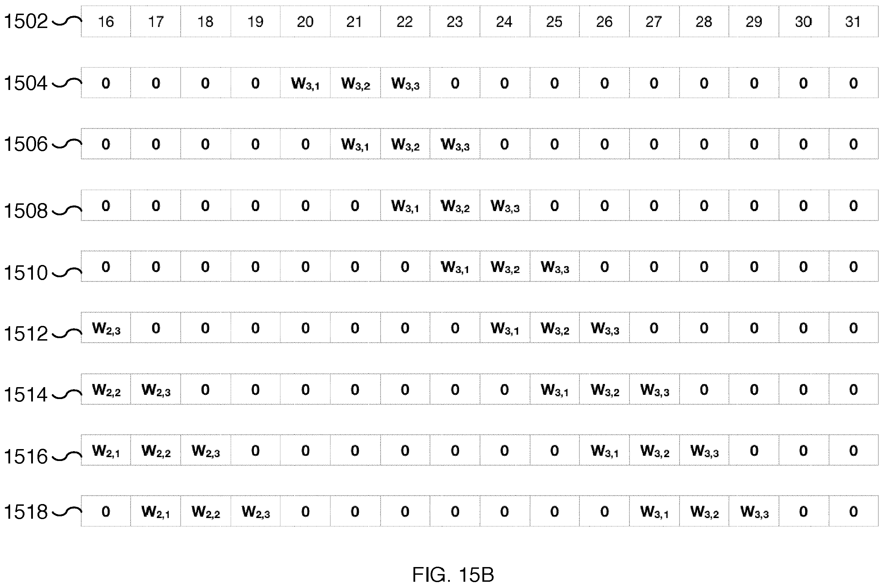

Figures 15A and 15B are diagrams illustrating an example of an unrolled weight matrix for performing depthwise convolution. Figures 15A and 15B include index labels 1501 and 1502 that indicate the location of a weight element in a 32-element weight input vector. Figures 15A and 15B include eight example weight input vectors 1503/1504, 1505/1506, 1507/1508, 1509/1510, 1511/1512, 1513/1514, 1515/1516, and 1517/1518. The first half of each weight input vector is shown in Figure 15A and the corresponding second half of each input vector is shown in Figure 15B. Due to the large size of the vectors, for ease of illustration, the weight input vectors are illustrated as vector pairs and split across Figures 15A and 15B. For example, the eight 32-element weight input vectors include 16-element vector pairs 1503/1504, 1505/1506, 1507/1508, 1509/1510, 1511/1512, 1513/1514, 1515/1516, and 1517/1518. The weight input vectors represent eight different weight input vectors that are broadcasted to the vector units of a dot product engine over eight passes. Examples of corresponding data input vectors are shown in Figures 14A and 14B and may remain unchanged for the entire eight passes as the weight input vectors change.

In some embodiments, the weight input vectors shown in Figures 15A and 15B are weight input vectors unrolled from weight matrix 1301 of Figure 13A. For example, each of weight input vectors 1503/1504, 1505/1506, 1507/1508, 1509/1510, 1511/1512, 1513/1514, 1515/1516, and 1517/1518 corresponds to elements from weight matrix 1301 of Figure 13A unrolled into and spaced out over a 1-dimensional vector. The weight elements and rows are prepared at different locations to align the weight input vector with different columns of a corresponding data input vector. Zero-value padded elements are included between the rows and at the end of the vectors at locations 30 and 31. For example, weight input vector 1503/1504 includes row 1 of weight matrix 1301 of Figure 13A at element locations 0-2, row 2 at element locations 10-12, and row 3 at element locations 20-22. Weight input vector 1505/1506 may be prepared by shifting the elements of weight input vector 1503/1504 to the right by one location. Similarly, weight input vectors 1507/1508, 1509/1510, 1511/1512, 1513/1514, 1515/1516, and 1517/1518 are created by shifting the elements of weight input vectors 1505/1506, 1507/1508, 1509/1510, 1511/1512, 1513/1514, and 1515/1516, respectively. In some embodiments, as the weight input vectors are shifted to the right, zero-value padding elements are introduced to the front of the weight input vectors.

In some embodiments, each of the weight input vectors of Figures 15A and 15B is broadcasted into appropriate vector units of a dot product engine at a different pass of the corresponding data input vectors. For a dot product engine with 32 vector units, 32 weight input vectors are loaded with the same weight input vector for each pass. For example, weight input vector 1503/1504 is broadcasted to each vector unit for pass one, weight input vector 1505/1506 is broadcasted to each vector unit for pass two, weight input vector 1507/1508 is broadcasted to each vector unit for pass three, and so forth, until weight input vector 1517/1518 is broadcasted to each vector unit for the eighth pass.

In some embodiments, weight input vectors 1503/1504, 1505/1506, 1507/1508, 1509/1510, 1511/1512, 1513/1514, 1515/1516, and 1517/1518 are generated and/or loaded into a dot product engine, such as dot product engine 215 of Figure 2 and/or dot product engine 800 of Figure 8, by a weight input unit such as weight input unit 805 of Figure 8. In some embodiments, the unrolling process to create weight input vectors 1503/1504, 1505/1506, 1507/1508, 1509/1510, 1511/1512, 1513/1514, 1515/1516, and 1517/1518 is performed at 905 of Figure 9, at 1001 and/or 1003 of Figure 10, at 1105 and/or 1107 of Figure 11, and/or at 1203, 1207, and/or 1209 of Figure 12. In some embodiments, the different weight input vectors of Figures 15A and 15B represent different weight input masks prepared for one iteration of an unrolling process that includes eight passes. Each of the weight input masks is a fully unrolled 3x3 weight matrix such as weight matrix 1301 of Figure 13A and is formatted to be aligned with different 3x3 slices of a data matrix, such as data matrix 1303 of Figure 13B.

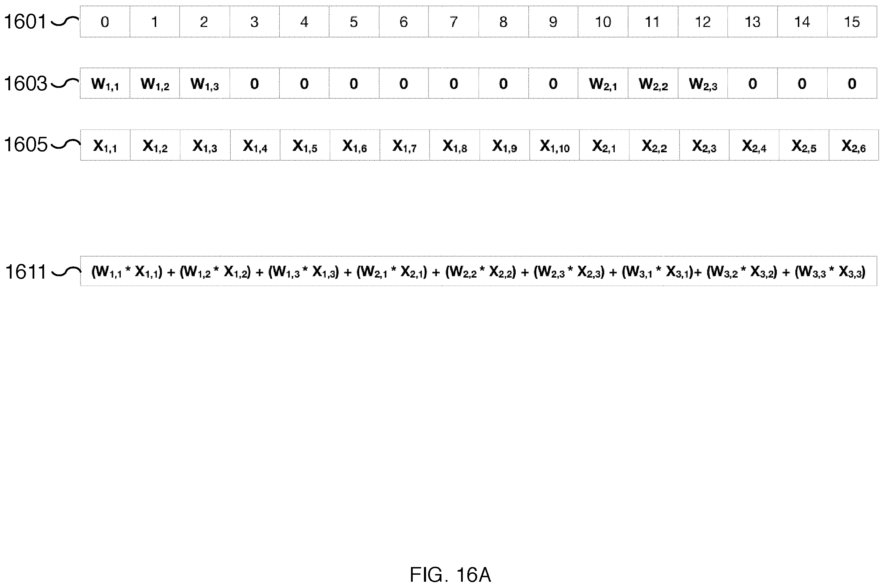

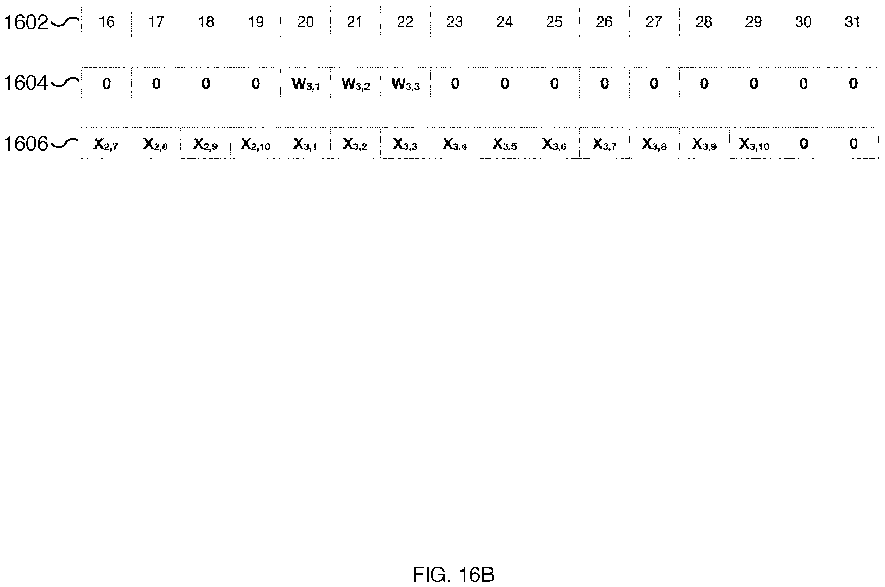

Figures 16A and 16B are diagrams illustrating an example of vector computations for performing depthwise convolution. Figures 16A and 16B include index labels 1601 and 1602 that indicate the location of weight and data elements in 32-element weight input vector 1603/1604 and data input vector 1605/1606, respectively. In some embodiments, weight input vector 1603/1604 is weight input vector 1503/1504 of Figures 15A and 15B and data input vector 1605/1606 is data input vector 1403/1404 of Figures 14A and 14B. In some embodiments, weight input vector 1603/1604 and data input vector 1605/1606 are examples of two input vectors loaded into a vector unit for performing vector operations. In various embodiments, each of the vector units of a dot product engine is loaded with a corresponding pair of input vectors.

In some embodiments, cell 1611 illustrates the equivalent vector computations performed by a vector unit of a dot product engine on input vectors of weight input vector 1603/1604 and data input vector 1605/1606. The vector computation result shown in cell 1611 is the result determined by multiplying each element of weight input vector 1603/1604 against a corresponding element of data input vector 1605/1606. The 32 elements from weight input vector 1603/1604 are multiplied against 32 elements of data input vector 1605/1606 to determine 32 multiplication results. In the example shown, cell 1611 includes only nine multiplication terms instead of 32. The nine multiplication terms correspond to the nine weight elements from weight input vector 1603/1604 and their corresponding data elements from data input vector 1605/1606. The zero-value elements of weight input vector 1603/1604 function as a weight mask that results in reducing the number of multiplication terms to nine from a possible 32. In some embodiments, the multiplication is performed using a vector multiply unit such as vector multiply unit 813 or 823 of Figure 8. In some embodiments, the multiplication results are fed as a vector into a vector adder unit to compute the sum of the multiplication results. The vector sum may be performed using a vector adder unit such as vector adder unit 815 or 825 of Figure 8. In the example shown, the result of the vector operations performed is a single result sum. In some embodiments, the result sum is a partial or intermediate result sum and may be stored in an accumulator. In some embodiments, the result sum is a dot product computed using weight input vector 1603/1604 and data input vector 1605/1606. The result sum may be outputted as one element of a vector result and written to an output unit such as output unit 809 of Figure 8. In some embodiments, the equivalent of the vector computation result shown in cell 1611 is performed using dot product engine 215 of Figure 2 and/or dot product engine 800 of Figure 8 and/or the processes of Figures 9-12. In some embodiments, the vector computations are performed at 907 of Figure 9, at 1003 of Figure 10, at 1109 of Figure 11, and/or at 1205 of Figure 12.

Although the foregoing embodiments have been described in some detail for purposes of clarity of understanding, the invention is not limited to the details provided. There are many alternative ways of implementing the invention. The disclosed embodiments are illustrative and not restrictive.

## Claims

1. A processor system, comprising:
a plurality of dot product processor units configured to perform a depthwise convolution of a data matrix having a plurality of channels with a plurality of depthwise convolution weight matrices including a separate depthwise convolution weight matrix for each of the plurality of channels, wherein each of the dot product processor units is configured to perform at least a portion of the depthwise convolution for one or more channels included in the plurality of channels; and
a plurality of element-wise multiplication units configured to at least in part perform multiplication operations of a pointwise convolution, wherein each of the element-wise multiplication units is configured to apply to each depthwise convolution partial result element received from one or more of the dot product processor units a corresponding data element from each of a plurality of pointwise convolution weight filters to determine element-wise multiplication unit results;
wherein the processor system is configured to sum together different groups of data elements from the element-wise multiplication unit results from the plurality of element-wise multiplication units to at least in part calculate different data elements of a result of the pointwise convolution.

2. The system of claim 1, wherein the plurality of element-wise multiplication units is configured to at least in part perform the multiplication operations of the pointwise convolution prior to a completion of the depthwise convolution.

3. The system of claim 1 or claim 2, wherein the processor system is configured to sum together the different groups of the data elements from the element-wise multiplication unit results at least in part in parallel.

4. The system of claim 1, claim 2 or claim 3, wherein each of the dot product processor units includes a plurality of calculation units; and preferably wherein each calculation unit of the plurality of calculation units includes a vector multiply unit and a vector adder unit; and preferably wherein the vector adder unit includes an adder tree.

5. The system of any one of claims 1 to 4, wherein the data matrix is a three-dimensional machine learning data matrix.

6. The system of any one of the preceding claims, wherein the separate depthwise convolution weight matrix and each of the plurality of pointwise convolution weight filters are machine learning weight matrices; and/or preferably wherein the separate depthwise convolution weight matrix is a 3x3 matrix; and/or preferably wherein the separate depthwise convolution weight matrix is a 3x3, 5x5, 7x7, 9x9, or 11x11 matrix.

7. The system of any one of the preceding claims, wherein each of the plurality of pointwise convolution weight filters has a channel depth that corresponds to a count of the plurality of channels of the data matrix.

8. The system of any one of the preceding claims, further comprising:
a plurality of reduction units;
a plurality of point-to-point connections, wherein each point-to-point connection of the plurality of point-to-point connections is configured to provide a result of a first reduction unit of the plurality of reduction units to a second reduction unit of the plurality of reduction units; and
a communication bus connecting together the plurality of dot product processor units.

9. The system of claim 8, wherein the first reduction unit includes an adder configured to perform vector addition operations.

10. The system of claim 8 or claim 9, wherein each of the plurality of dot product processor units is configured to receive a depthwise convolution operation instruction via the communication bus.

11. The system of claim 8, claim 9 or claim 10, wherein each of the plurality of element-wise multiplication units is configured to receive a pointwise convolution operation instruction via the communication bus.

12. The system of claim any one of claims 8 to 11, wherein the second reduction unit of the plurality of reduction units is configured to add together a local result of an element-wise multiplication unit of the plurality of element-wise multiplication units with a reduced result of the first reduction unit of the plurality of reduction units to determine a reduction unit result; and preferably wherein the second reduction unit is further configured to provide the reduction unit result to a third reduction unit of the plurality of reduction units via a point-to-point connection of the plurality of point-to-point connections.

13. A method comprising:
determining a vector of depthwise convolution partial result elements using a dot product engine of a first processing element, wherein the vector of depthwise convolution partial result elements corresponds to a matrix slice from an assigned channel of a three-dimensional data matrix and a separate depthwise convolution weight matrix;
providing the vector of depthwise convolution partial result elements to an element-wise multiplication unit of the first processing element;
determining element-wise multiplication results for each element of the vector of depthwise convolution partial result elements by performing multiplication operations of a pointwise convolution using the each element and corresponding data elements from a channel of a plurality of pointwise convolution weight filters;
providing the element-wise multiplication results for each element of the vector of depthwise convolution partial result elements to a reduction unit of the first processing element;
receiving upstream results from a second processing element via a first point-to-point connection;
summing together the upstream results with the corresponding element-wise multiplication results to determine reduction unit results; and
sending the reduction unit results to a third processing element via a second point-to-point connection.

14. The method of claim 13, wherein the upstream results are at least in part determined using corresponding data elements from corresponding channels of the plurality of pointwise convolution weight filters.

15. A processing element system, comprising:
a dot product processor unit configured to perform a depthwise convolution using a two-dimensional matrix slice of a three-dimensional data matrix with a depthwise convolution weight matrix of a plurality of depthwise convolution weight matrices;
an element-wise multiplication unit configured to at least in part perform multiplication operations of a pointwise convolution by applying to each depthwise convolution partial result element received from the dot product processor unit a corresponding data element from each of a plurality of pointwise convolution weight filters to determine local element-wise multiplication unit results;
a first point-to-point connection configured to receive an upstream result from an upstream processing element;
a reduction unit configured to sum together the received upstream result and the determined local element-wise multiplication unit results to determine a reduction unit result; and
a second point-to-point connection configured to provide the determined reduction unit result to a downstream processing element.
